# EUROPEAN PATENT SPECIFICATION

(11) **EP 4 222 920 B1**
(45) Date of publication and mention of the grant of the patent: **16.10.2024**
(21) Application number: 21716911.9
(22) Date of filing: 12.03.2021
(51) Int. Cl.: H04L 9/40, H04L 69/00

(54) **DYNAMIC OPTIMIZATION OF CLIENT APPLICATION ACCESS VIA A SECURE ACCESS SERVICE EDGE (SASE) NETWORK OPTIMIZATION CONTROLLER (NOC)**
DYNAMISCHE OPTIMIERUNG DES ZUGANGS ZU CLIENT-ANWENDUNGEN ÜBER EINE NETZWERKOPTIMIERUNGSSTEUERUNG MIT SICHEREM ZUGANGSDIENST (SASE)
OPTIMISATION DYNAMIQUE D'ACCÈS D'APPLICATION DE CLIENT PAR L'INTERMÉDIAIRE D'UN CONTRÔLEUR D'OPTIMISATION DE RÉSEAU (NOC) DE PÉRIPHÉRIE DE SERVICE D'ACCÈS SÉCURISÉ (SASE)

(30) Priority: 29.09.2020 US 202017037105
(43) Date of publication of application: 09.08.2023
(73) Proprietor: Cisco Technology, Inc., San Jose, CA 95134 (US)
(72) Inventor: GOBENA, Yeneneh, Elfaged, Cary, NC 27519 (US); DAHIR, Hazim, Hashim, Wake Forest, NC 27587 (US); ROWLEY, Timothy, Vista Dr., Apt. 1 Dana Point, CA 92629 (US); DARWISH, Ibrahim, Amir, San Jose, CA 95133 (US)
(74) Representative: Warren, Caroline Elisabeth
(86) International application number: PCT/US2021/022227
(87) International publication number: WO 2022/071985

(56) References cited:
- WO-A1-2013/067006
- WO-A1-2013/067006
- US-A1- 2013 111 548
- US-A1- 2013 111 548

## Description

### RELATED APPLICATION

This PCT international application claims the benefit of priority U.S. Application No. I 7 /037,105, filed September 29, 2020.

### TECHNICAL FIELD

The present disclosure relates generally to continuous monitoring and optimization of a network based on security insights to address a user-level application experience. More specifically, this disclosure relates to a secure access service edge (SASE) network optimization controller (NOC) (referred to herein as an SNOC) that leverages additional security performance metrics and network performance metrics provided by the SASE device to maintain a user experience application access while also maintaining security controls.

### BACKGROUND

Users access applications and other services provided over a computing network. In some instances, the access of these applications and other services may suffer from variations in network and security performance of a user endpoint within the network. In one example, key performance indicators (KPIs) relate to and/or define these variations in network and security performance. For example, a user that may utilize a large corporate environment or leverage virtual private network (VPN) services to access computing resources at a corporate headquarters. These access channels may, for example, be conducted via cloud services over the Internet, via a software-defined networking in a wide area network (SD-WAN) connection from their homes or other locations, and a VPN-less solution on their hand-held devices, among other computer network communication channels or access modalities. Connection times, speeds, and quality of data transmission, among other KPIs may vary from user to user depending on factors surrounding the access modality(ies) used by the user endpoint. This situation may result in an unexpected and/or undesirable decrease in the quality of service (QoS) experienced by the user when interacting with the network and the applications.

Trusted applications bypass processes may be employed, where an administrator may bypass certain security functions such as deep packet inspection once performance of the system degrades beyond a defined threshold. This mechanism works well when applications are well known and are 100% trusted in a central location. However, as systems and users become distrusted within an ever-increasing network environment size and complexity, the ability to trust various users and applications becomes an issue. Further, the work force throughout the world has changed to a remote work force, and each user may utilize their own modalities to consume services. In this context, networks are distributed and adapting to the increase in size and complexity of a remote work force where trust becomes an issue amongst users and applications.

In one example, a user may choose to access the applications and other services using a different access modality that provides more efficient network performance but provides a different level of security to the user endpoint. For example, the user may utilize a direct internet access (DIA) utilizing, for example, a domain name system security extensions (DNSSEC). While the DIA may provide relatively better network performance by reducing network latencies, increasing data packet transmissions, and providing a more reliable connection, among other advantages associated with the network performance, the user may be compromising network security. Thus, the ability to provide a consistent policy and user experience from a deterministic network may prove difficult. It may be difficult to balance user experience with appropriate security controls in a nondeterministic computing environment.

WO 2013/067006 A1 describes a system and method for application security and performance assessment. Aspects of the disclosed technology relate to an end-to-end system and method for managing security and privacy risks associated with downloadable applications for devices, as well as for monitoring performance of downloadable applications. The disclosed system and method allows for curation of an application distribution channel in which an enterprise administrator can have top-down and/or bottom-up management of a network of 10 devices. The top-down functionality allows for curation of application based on risk and performance, while the bottom-up functionality allows for real-time removal of harmful items and/or over-the-air healing functionality.

US 2013/111548 A1 is further prior art.

### BRIEF DESCRIPTION OF THE DRAWINGS

The detailed description is set forth below with reference to the accompanying figures. In the figures, the left-most digit(s) of a reference number identifies the figure in which the reference number first appears. The use of the same reference numbers in different figures indicates similar or identical items. The systems depicted in the accompanying figures are not to scale and components within the figures may be depicted not to scale with each other.
FIG. 1 illustrates a system-architecture diagram of an example secure access service edge (SASE) network optimization controller (NOC) (SNOC), according to an example of the principles described herein.
FIG. 2 illustrates a system-architecture diagram of the example SNOC of FIG. 1 depicting application of policies configured by the SNOC, according to an example of the principles described herein.
FIG. 3 is a component diagram of example components of a SNOC, according to an example of the principles described herein.
FIG. 4 illustrates a flow diagram of an example method for managing access modalities of a user endpoint via a SNOC, according to an example of the principles described herein.
FIG. 5 illustrates a flow diagram of an example method for managing access modalities of a user endpoint via a SNOC, according to an example of the principles described herein.
FIG. 6 illustrates a computing system diagram illustrating a configuration for a data center that may be utilized to implement aspects of the technologies disclosed herein.
FIG. 7 illustrates a computer architecture diagram showing an example computer hardware architecture for implementing a computing device that may be utilized to implement aspects of the various technologies presented herein.

### DESCRIPTION OF EXAMPLE EMBODIMENTS

### OVERVIEW

The present invention is defined by the independent claims. Preferred embodiments are set forth in the dependent claims.

An organization such as a corporation or an individual may access applications and/or services via a myriad of different access modalities. In doing so, network performance may degrade for the access modality a user is currently using. Further, in some instances, security may be compromised for one or more computing devices within a network before and/or after the user changes an access modality within the network.

A SASE may provide a number of different types of security performance metrics and network performance metrics to a NOC. The NOC may utilize the different types of security performance metrics and network performance metrics to configure policies that allow the user to obtain an optimized network performance while maintaining a level of security that may be required by a user computing device, the network, and application being accessed by the user computing device, and/or a service being utilized by the user computing device. As used herein, an example secure access service edge (SASE) network optimization controller (NOC) may be referred to as a SNOC.

Examples described herein provide a network optimization controller (NOC) including one or more processors, and one or more non-transitory computer-readable media storing instructions that, when executed by the one or more processors, cause the one or more processors to perform operations including obtaining, from a secure access service edge (SASE) device executing a security service, a first data set defining a security performance metric provided by the security service, and obtaining, from the SASE, a second data set defining a network performance metric associated with a network device. The operations further include defining a policy based at least in part on the first data set and the second data set, determining if the policy has been violated, and changing a first access modality provided for the network device to access an end host to a second access modality based at least in part on the policy being violated. The first access modality and second access modality define different methods of access to the end host.

Defining the policy may include updating an existing policy based at least in part on the first data set and the second data set. Further, defining the policy may include determining if an application executed by the end host is on a whitelist, and based at least in part on the application being executed by the end host is on the whitelist, defining the policy to allow access to the second access modality where the second access modality has a different level of security risk relative to the first access modality. The operations further include communicating the policy to a second network device. The second network device may be configured to execute the policy.

The policy may define a time period to use the second access modality. The operations further include changing the first access modality to the second access modality may include utilizing the second access modality for the time period, and changing to the first access modality based at least in part on an expiration of the time period. The security performance metric provided by the security service includes a metric provided by a domain name system (DNS) layer security service, a secure web gateway (SWG) service, a firewall service, a cloud access security broker (CASB) service, an interactive threat intelligence service, and combinations thereof. Determining if the policy has been violated includes determining if the security performance metric violates a threshold. The network performance metric associated with a network device includes a data transfer rate, a communication latency, or a session duration. Determining if the policy has been violated includes determining if the network performance metric violates a threshold.

Examples described herein also provide a method includes obtaining, from a secure access service edge (SASE) device executing a security service, a first data set defining security performance metric provided by the security service, and obtaining, from the SASE, a second data set defining a network performance metric associated with a network device. The method may further include defining a policy based at least in part on the first data set and the second data set, determining if the policy has been violated, and changing a first access modality provided for the network device to access an end host to a second access modality based at least in part on the policy being violated, the first access modality and second access modality defining different methods of access to the end host. Defining the policy includes updating an existing policy based at least in part on the first data set and the second data set.

Defining the policy includes determining if an application executed by the end host is on a whitelist. The method may further include, based at least in part on the application being executed by the end host is on the whitelist, defining the policy to allow access to the second access modality. The second access modality has a different level of security risk relative to the first access modality.

The method further includes communicating the policy to a second network device. The second network device is configured to execute the policy. The policy may define a time period to use the second access modality. Changing the first access modality to the second access modality includes utilizing the second access modality for the time period, and changing to the first access modality based at least in part on an expiration of the time period.

The security performance metric provided by the security service may include a metric provided by a domain name system (DNS) layer security service, a secure web gateway (SWG) service, a firewall service, a cloud access security broker (CASB) service, an interactive threat intelligence service, and combinations thereof. Determining if the policy has been violated includes determining if the security performance metric violates a threshold. The network performance metric associated with a network device includes a data transfer rate, a communication latency, or a session duration. Determining if the policy has been violated includes determining if the network performance metric violates a threshold.

Examples described herein also provide a non-transitory computer-readable medium storing instructions that, when executed, cause one or more processors to perform operations, including obtaining, from a secure access service edge (SASE) device executing a security service, a first data set defining security performance metric provided by the security service, and obtaining, from the SASE, a second data set defining a network performance metric associated with a network device. The operations may further include defining a policy based at least in part on the first data set and the second data set, determining if the policy has been violated, and changing a first access modality provided for the network device to access an end host to a second access modality based at least in part on the policy being violated. The first access modality and second access modality define different methods of access to the end host.

Defining the policy includes updating an existing policy based at least in part on the first data set and the second data set. Further, defining the policy includes determining if an application executed by the end host is on a whitelist, and based at least in part on the application being executed by the end host is on the whitelist, defining the policy to allow access to the second access modality. The second access modality has a different level of security risk relative to the first access modality.

The operations further comprises communicating the policy to a second network device, the second network device being configured to execute the policy. The security performance metric provided by the security service may include a metric provided by a domain name system (DNS) layer security service, a secure web gateway (SWG) service, a firewall service, a cloud access security broker (CASB) service, an interactive threat intelligence service, and combinations thereof. Determining if the policy has been violated includes determining if the security performance metric violates a threshold. The network performance metric associated with a network device may include a data transfer rate, a communication latency, or a session duration. Determining if the policy has been violated includes determining if the network performance metric violates a threshold.

Additionally, the techniques described in this disclosure may be performed as a method and/or by a system having non-transitory computer-readable media storing computer-executable instructions that, when executed by one or more processors, performs the techniques described above.

### EXAMPLE EMBODIMENTS

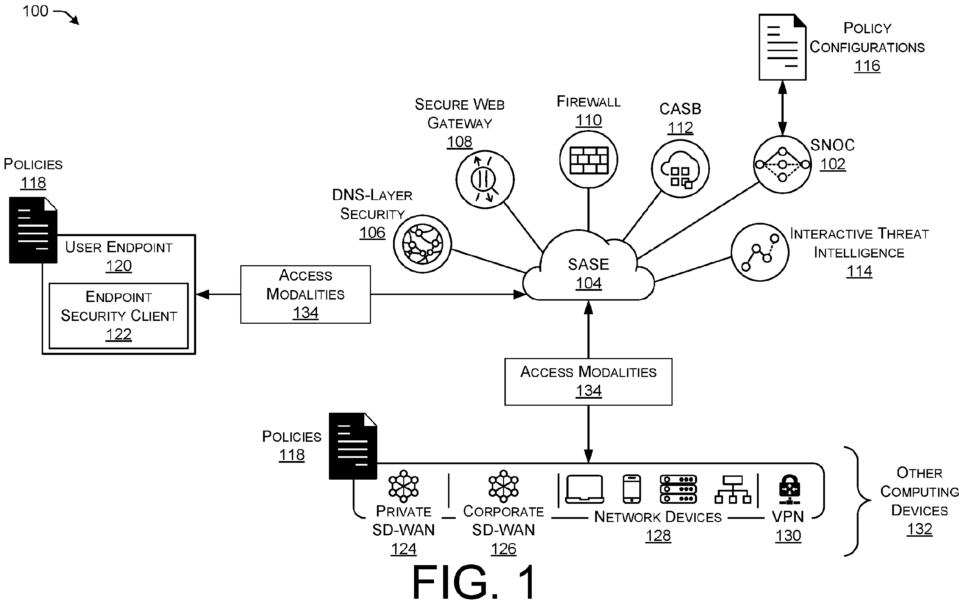

Turning now to the figures, FIG. 1 illustrates a system-architecture diagram 100 of an example secure access service edge (SASE) network optimization controller (NOC) (herein referred to as a SNOC) 102, according to an example of the principles described herein. A SASE 104 may include hardware and software that provide network security functions including, for example, a domain name system (DNS) layer security 106 service, a secure web gateway (SWG) 108 service, firewall 110 service, a cloud access security broker (CASB) 112 service, and an interactive threat intelligence (ITI) 114 service, among other network and security services. The SASE 104 may include capabilities provided by a WAN such as a software-defined networking in a wide area network (WAN) (SD-WAN) to support any dynamic secure access needs of an organization. In one example, the capabilities of a SASE 104 may be delivered as a service (aaS) and may be based upon the identity of the entity, real-time context, enterprise security/compliance policies and continuous assessment of risk/trust throughout the sessions. Identities of entities may be associated with people, groups of people (e.g., branch offices), devices, applications, services, Internet of Things (IoT) systems and/or edge computing locations, among other associations. The SASE 104 described herein includes client-optimized security edge and/or client-optimized security access functionalities to provide the optimization of a user experience through or via a SASE network. Using the network ecosystem of the SASE 104, insights including network performance and security intelligence may be obtained to improve the execution of applications utilized by a user endpoint 120.

In one example, the SASE 104 is the Umbrella^{™} network security product suite developed by Cisco^{®}. The SASE 104 provides a myriad of different network and security intelligence data to the SNOC 102 as described in more detail herein. The security and network services provide by the SASE 104 may protect users, their respective user endpoints 120, and other computing devices 132 from malware, botnets, phishing, targeted online attacks, and other security threats that may be encountered within and/or without the SASE 104 environment. The other computing devices 132 may include, for example, any private SD-WAN 124, any corporate SD-WAN 126, network devices 128 (e.g., laptop computing devices, desktop computing devices, mobile phones, smart phones, tablets, servers, routers, workstations, Internet-of-Things (IoT) devices, etc.), virtual private network (VPN) devices 130, among a myriad of other computing devices communicatively coupled to the SASE 104.

In one example, the SASE 104 may provide domain name system (DNS) layer security 106 services. DNS-layer security services 106 provided by the SASE 104 may include, for example, the ability to create and enforce security policies related to the execution of the devices behind the network perimeter. The SASE 104 may include any type of data-driven threat intelligence engine that automatically updates malware, botnet, and phishing domain and IP whitelists and blacklists enforced by the SASE 104. The intelligence data may be sourced from DNS requests the SASE 104 receives, and border gateway protocol (BGP) routing tables that are managed by the SASE's 104 network operations center. In this manner, the DNS layer security 106 services allow for security policies to not only be created and executed for the user endpoint 120 and the other computing devices 132, but also created and executed for the devices within the overall computing environment. Use of security intelligence provided by the DNS layer security 106 services reduces or eliminates the potential for malicious applications and/or content to be installed or introduced into the user endpoint 120 and other computing devices 132. The security intelligence provided by the DNS layer security 106 services may be provided to the SNOC 102 for use in creating and executing the policies for the devices within communicatively coupled thereto.

Further, in one example, the SASE 104 may provide a secure web gateway (SWG) 128 service. The SWG 108 service provides, for example, safe internet access to users who do not use a corporate networks or virtual private networks (VPNs) to connect to remote data centers. A SWG 108 provides protection against online security threats by enforcing an enterprise's security policies and by filtering malicious Internet traffic. In one example, the malicious Internet traffic may be filtered in real-time. The SWG 108 provides uniform resource locator (URL) filtering, application controls for web applications, and the detection and filtering of malicious code. Further, the SWG 108 provides data leak prevention services. As to the real-time traffic inspection, the SWG 108 inspects web traffic in real-time, analyzing content against corporate policies and ensuring any content that is inappropriate or which contravenes enterprise policy is blocked. The SWG 108 may perform any type of file inspection to ensure that the content transmitted via the web traffic is appropriate. In one example, the SWG 108 may allow an administrator to enforce security policy templates off the shelf and also configure policies that are suited to the corporation's business model and/or compliance requirements. In this manner, the SWG 108 may interact with the SNOC 102 to create, modify, edit, remove, delete, and otherwise configure policies for execution within the SASE 104. Further, the SWG 108 provides roaming users to authenticate seamlessly and to have the same security policies apply to their individual computing devices as if the computing devices were communicatively coupled to the corporation's network. The SWG 108, in this manner, may also be used to protect the user endpoint 120 and other computing devices 132 as these devices access the Internet and as Internet-related policies are created and executed by the SWG 108. As to data leak prevention, the SWG 108 reduces or eliminates corporate data from being leaked to or stolen by a third party by detecting business terms such as payment card industry (PCI) number patterns and phrases or personally identifiable information. Any security intelligence provided by the SWG 108 may be provided to the SNOC 102 for use in creating and executing the policies for the devices communicatively coupled to the SASE 104.

In one example, the SASE 104 may also provide a firewall 110 service. The firewall 110 service monitors and controls incoming and outgoing network traffic based on a number of predetermined security rules and establishes a barrier between a trusted internal network and untrusted external network, such as the Internet. In this manner, the firewall 110 ser may interact with the SNOC 102 to execute policies configured at least in part by the SNOC 102 within the SASE 104. The security services provided by the firewall 110 may be provided to the user endpoint 120 and other computing devices 132. Specifically, security intelligence provided by the firewall 110 may be provided to the SNOC 102 for use in creating and executing the policies within the SASE 104 for the user endpoint 120 and other computing devices 132.

Further, in one example, the SASE 104 may also include a cloud access security broker (CASB) 112 service. A CASB 112 may be any on-premises or cloud-based software that sits between cloud service users and cloud applications and monitors all activity and enforces security policies. The CASB provides a number of services such as monitoring user activity, warning administrators about potentially hazardous actions, enforcing security policy compliance, and automatically preventing malware, among other activity. The CASB 112 may deliver security by preventing high-risk events and/or management by monitoring and mitigating the high-risk events. In one example, the CASB 112 may utilize application program interfaces (APIs), performance probes, telemetry, and other programming to inspect data and activity in the cloud to alert of risky events after the fact. Further, the CASB 112 may inspect firewall or proxy logs for usage of cloud applications. The same functions provided by the CASB 112 in relation to the SASE 104 may similarly applied to the user endpoint 120 and other computing devices 132. Specifically, security intelligence provided by the CASB 112 may be provided to the SNOC 102 for use in creating and executing the policies for the devices communicatively coupled to the SASE 104.

The SASE 104, in one example, may also include an interactive threat intelligence (ITI) 114 service. The ITI 114 service provides intelligence associated with the relationships and evolution of internet domains, IPs, and files to assist in pinpointing attackers' infrastructures and predict future threats. Similarly, to the examples described above, the same functions provided by the ITI 114 in relation to the SASE 104 may similarly applied to the user endpoint 120 and other computing devices 132. Specifically, security intelligence provided by the ITI 114 may be provided to the SNOC 102 for use in creating and executing the policies for the devices communicatively coupled to the SASE 104.

The intelligence provided by the SASE 104 may be provided to the SNOC 102 to create and execute policies based on the intelligence obtained in connection with the SASE 104 and computing devices communicating via the SASE 104. In one example, data defining intelligence from at least one security service executed by the SASE including the DNS layer security 106 services, a SWG 108 services, a firewall 110 services, CASB 112 services, an ITI 114 services, and combinations thereof may be utilized to by the SNOC 102 in configuring a number of policies.

In the examples described herein, the SNOC 102 service provided via the SASE 104 may be offered as one of the security services in the SASE 104. In one example, an enterprise may subscribe to the services provided by the SNOC 102 for managing a user experience within the SASE 104 by dynamically and autonomously adjusting with the policies that further the security and functionality of the user endpoint 120 and/or other computing devices 132. Management of the user experience within the SASE 104 includes utilization of differentiated and relational access modalities 134 to allow the SASE 104 to handle a myriad of network and security parameters and/or key performance indicators (KPIs) as adjustable or configurable parameters in to der to optimize user performance.

The SNOC 102 may be any network optimization controller (NOC) that resides on or is intricately executed with the SASE 104. A NOC may be any combination of hardware and software that functions as a controller. Thus, the SNOC 102 may function to control any policy-related activities including, for example, policy creation, modification, editing, removal, deletion, and otherwise altering policies for execution within the SASE 104.

Further, the SNOC 102 may function to either directly or indirectly (e.g., via the policies) modify an access modality 134 of the user endpoint 120 and/or other computing devices 132. As used in the present specification and in the appended claims, the term "access modality" or similar language is meant to be understood broadly as any communication channels and/or methods used by the user endpoint 120, the other computing devices 132, or any other devices associated with the SASE 104 to access applications and/or utilize services provided via a computing network. Examples of access modalities 134 include a direct internet access (DIA) utilizing, for example, a domain name system security extensions (DNSSEC), private and/or corporate virtual private networks (VPNs), a secure internet gateway (SIG), a secure web gateway (SWG), private and/or corporate SD-WANs of different types including a remote access VPN (RAVPN) and a site-to-site VPN (S2SVPN), an enterprise head-end network, cellular networks and associated devices, and a cloud network, among other access modalities 134 as described herein. The access modalities 134 may also utilize split tunneling where a user may access dissimilar security domains like a public network (e.g., the Internet) and a LAN or WAN at the same time, using the same or different network connections. As described in more detail herein, the SNOC 102 may configure a number of policies based on KPIs defining security performance metrics and network performance metrics provided by the SASE 104 along with the user endpoint 120 and/or other computing devices 132. Further, the SNOC 102 provides access to the user endpoint 120 and/or other computing devices 132 via any communication path through a number of networks including cloud networks, etc.

Although depicted as an element of SASE 104, the SNOC 102 may be located anywhere within the network system described and/or depicted herein. Further, the policy configurations 116 configured by the SNOC 102 may be transmitted to any device within the network system described herein and stored in those devices as the policies 118 including the various elements of the SASE 104 such as the devices associated with the DNS-layer security 106 service, the SWG 108 service, the firewall 110 service, the CASB 112 service, and the ITI 114 service, among other network and security services. Further, the policy configurations 116 configured by the SNOC 102 may be transmitted to the user endpoint 120, the other computing devices 132, and/or any other device coupled to the network system described herein and presented as policies 118. The policies 118 are depicted in FIG. 1 may be copies of the policy configurations 116 produced by the SNOC 102. In one example, the policies 118 may be updated continually or at regular intervals when the SNOC 102 creates new policies and/or updates existing policies. The new and/or updated policies 118 maybe pushed to the user endpoint 120, the other computing devices 132, and/or any other device coupled to the network system based at least in part on the new policies being created and/or updated by the SNOC 102.

In one example, the SNOC 102 may receive a baseline access modality policy referred to herein as a baseline policy. The baseline policy may be preconfigured and executed by the SNOC 102, the SASE 104, and other devices described herein. Thus, without use of the security performance metrics and/or network performance metrics as described herein, the baseline policy may be instantiated within the systems described herein. The baseline policy may, at a later instances, be dynamically changed based on the security performance metrics and/or network performance metrics as described herein.

The user endpoint 120 may be any computing device that communicates back and forth with the SASE 104 in order to access applications and/or services. In one example, the user endpoint 120 may be a laptop computing devices, desktop computing devices, mobile phones, smart phones, tablets, servers, routers, workstations, Internet-of Things (IoT) devices, etc.), virtual private network (VPN) devices 130, among a myriad of other computing devices communicatively coupled to the SASE 104. The user endpoint 120 may include an endpoint security client 122 that functions to authenticate and configure routing and encrypt and transport data packets and other network traffic via one of the access modalities 134 (e.g., a private and/or corporate VPN, a DIA, a DNSSEC, a SIG, a SWG, a private and/or corporate SD-WAN, a RAVPN, a S2SVPN, an enterprise head-end network, cellular networks and associated devices, and a cloud network, among other access modalities 134 as described herein). In one example, the endpoint security client 122 may include the AnyConnect^{™} endpoint security client 122 developed and distributed by Cisco^{®}. In one example, the user endpoint 120 may include the policies 118 obtained from the SNOC 102 as the SNOC 102 configures the policies and produces the policy configurations 116.

Similarly, the other computing devices 132 may also include an endpoint security client 122 that functions to authenticate and configure routing and encrypt and transport data packets and other network traffic via one of the access modalities 134. In one example, the other computing devices 132 may also include the policies 118 obtained from the SNOC 102 as the SNOC 102 configures the policies and produces the policy configurations 116.

The SASE 104 and the SNOC 102 serve to provide a cross architecture controller (e.g., the SNOC 102) that continuously monitors and optimizes network performance based on security insights received from a security suite (e.g., services provide by the SASE 104) at a user level application experience. An integrated closed loop security and network telemetry automated solution is provided by the SASE 104 and the SNOC 102. Further, the SASE 104 and the SNOC 102 provide the ability to maintain a user's experience with applications and services provided via the network including access to the application while maintaining security controls. The differentiated and relational access modalities 134 allow a user to deal with any network and security parameter or KPI as an adjustable or configurable parameter to optimize user performance. Still further, the SASE 104 and the SNOC 102 provide a converged network and agent/client-based solution with the ability to measure real time user-experience and subsequently adjusting network, security, and/or application polices to maintain a security and user experience level. Further, the network may be optimized based at least in part on performance or threat related re-routing or throttling of traffic using the policies created and/or updated by the SNOC 102.

The SASE 104 and its SNOC 102 provide for a converged system where a plurality of network and security devices identify at least one KPI indicative of a performance value (e.g., a performance degradation in network or security). In one example, depending on a criticality of the application being accessed, a control signal may be sent to the user endpoint 120 and/or the other computing devices 132 to direct traffic over a different access modality 134 (e.g., connectivity method) and/or dynamically modify quality of service (QoS) settings on a secure SD-WAN overlay provided by the SASE 104 for a period of time such as in instances where there exist communication links that maybe unstable (e.g., satellite, cellular, or degraded internet communication links).

In order to exert control and optimize inbound traffic performance coming into the SASE 104, areas within the system at which control points may be created may be identified. The SNOC 102 may identify these control points and create the control points within the network environment. One such control point may be created within the SASE 104 and/or the SNOC 102 itself. Further, a control point may be created at one or more of the he DNS-layer security 106 service, the SWG 108 service, the firewall 110 service, the CASB 112 service, and the ITI 114 service, among other network and security services provided by the SASE 104. Further, in one example, control points may be created at a head end module within a cloud network where VPN, SDWAN connections of different types (RAVPN/S2SVPN), and other network architectures may be terminated, and traffic routing decisions may also be influenced by the SNOC 102. Still further, a number of control points may be created at the client level of the network such as at the user endpoint 120 and/or the other computing devices 132 via supplications or security posture agents that are connecting to the SASE 104.

In one example, the SNOC 102 executing on the SASE 104 may determine that a connection with the user endpoint 120, for example, is running slow by looking at the SASE 104 elements (106, 108, 110, 112, 114) including firewall, proxy, and/or security elements. The SNOC 102 may determine, based on the collective analytics from different sources (106, 108, 110, 112, 114) that a VPN connection the user endpoint 120 is utilizing should be optimized for a particular user or network. Based on the anomaly detected, the SNOC 102 may determine that the user may need to optimize their connection. The SNOC 102 may apply a number of thresholds in making a determination as to when a network connection qualifies as under-performing and/or when to seek to make a correction to the performance including changing an access modality 134 and/or changing a security setting, among other changes to a current network or security performance metric as defined by the KPIs described herein. For example, the user endpoint 120 may be accessing the network over a first VPN headend in a first cloud network as a first access modality 134. However, the SNOC 102 may determine that a first VPN cluster, or a second VPN cluster on a second cloud network might offer a network and/or security performance above a threshold and/or as required by the application being accessed by the user endpoint 120 as a second access modality 134. The SNOC 102 may make such a determination based on a number of predetermined remediation steps when the performance issue is detected. The SNOC 102 may then cause the network traffic from the user endpoint 120 to be redirected through the second access modality (e.g., the first VPN cluster, or a second VPN cluster on a second cloud network) to ensure that the user utilizing the user endpoint 120 will benefit from relatively better network performance.

In one example, the functionality of the SNOC 102 extends to end hosts via their VPN supplicant (e.g., an entity at one end of a point-to-point LAN segment that is being authenticated by an authenticator that is attached to the other end of that link). As decisions are made at the SNOC 102 based on the network or security performance metric as defined by the KPIs described herein, the client devices which utilize a VPN supplicant may call in to action various access modalities 134 (e.g., modules and path selection choices). In one example, the modules and path selection choices may include a split-tunneling path selection or an endpoint security client 122 (e.g., the AnyConnect^{™} module selection) as described above.

In an example where split-tunneling is selected by the SNOC 102 as the module and path selection choice, the SNOC 102 may remotely manage split-tunnel policy by way of integrations for optimal traffic routing to either send traffic for a given application direct to the SASE 104 or allow traffic to egress via the client's local internet access via a tunnel bypass. The split-tunnel method may utilize statically defined policy based on domain name system (DNS) and fully qualified domain name (FQDN) information. Utilizing the SASE 104 and SNOC 102, the split-tunnel policy may be dynamic based on the influence of the SNOC 102 for a time period. In one example, the SNOC 102 may cause the access modality 134 to revert to the original access modality 134 based at least in part on the expiration of the time period.

In an example where the endpoint security client 122 (e.g., the AnyConnect^{™} module selection) is used for selectin of the access modality 134, the endpoint security client 122 may have the ability to instruct any given end host to connect using various modules, per application being accessed as defined by the policies 118 and as defined by the policy configurations 116 made by the SNOC 102. For example, the user endpoint 120 acting as a client may use a direct VPN to a SIG cloud, a direct VPN to an on-premises VPN headend, or other access modality 134, and local client proxy settings may be modified to direct traffic at a SWG for direct proxy access while utilizing the SASE 104 for access to other internet applications. In another example, remote access and reverse proxy capabilities via a multi-factor authentication (MFA) such as Duo^{™} two factor authentication method developed and distributed by Cisco^{®} may be utilized. The endpoint security client 122, when preloaded on the clients, may receive the benefit of the influence of the SNOC 102 by selecting the best access modality 134 for a given application and allowing for multiple access modalities 134 to be in use at the same time.

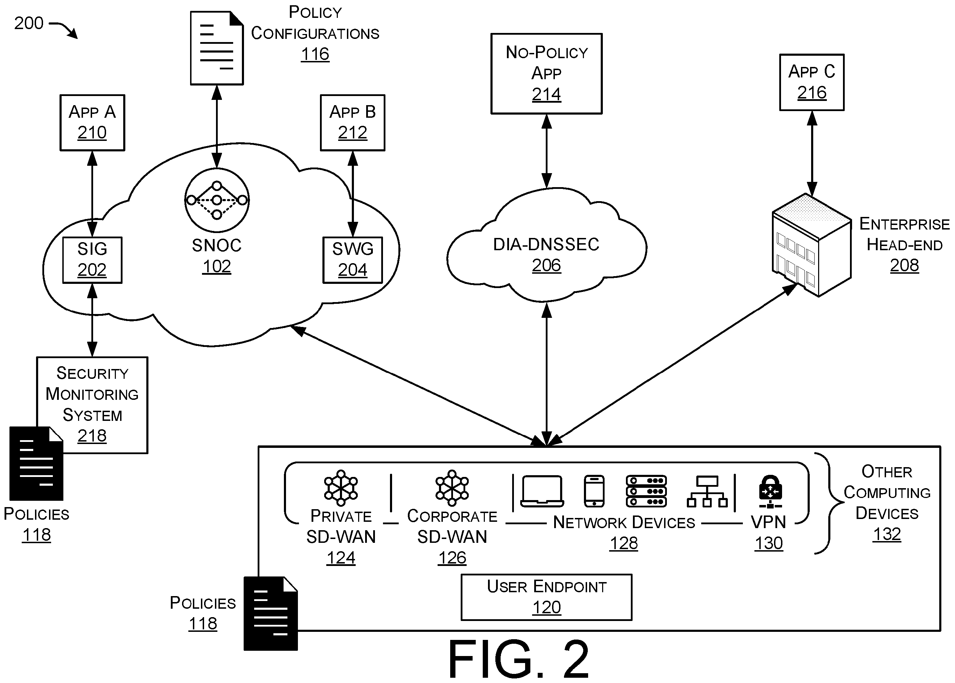

FIG. 2 is a system-architecture diagram 200 of the example SNOC 102 of FIG. 1 depicting application of policies configured by the SNOC 102, according to an example of the principles described herein. With additional reference to FIG. 2, the SNOC 102 acting as the controller of the SASE 104 computing architecture, may receive logs, telemetry data, and other forms of network and performance data from the SNOC 102, the SASE 104, and/or the various security devices (106, 108, 110, 112, 114) of the SASE 104. The SNOC 102, utilizing the network and performance data may corelate and compare them with application policies defined within the policy configuration 116 and pushed to other computing devices as policies 118. The policies 118 defined by the SNOC 102 act as rules by which the SASE 104 is caused to operate. The policies may be triggered or violated by one or more client policies depending on a connection modality. A first type of policy that may be triggered or violated includes performance-based policies where the SNOC 102 seeks to optimize the network performance within the network. The performance-based optimization may include client-based network optimization and may be based on security insights obtained from the various security devices (106, 108, 110, 112, 114) of the SASE 104. In one example, an application owner may set a number of thresholds and/or tolerance measurements that best fit and optimize client flow sessions as to the application. For example when a session duration through a firewall 110 is deemed longer than a threshold time period and/or lacks traffic to a degree below a data transfer threshold, the application policy may dynamically send an update to the client to stop using a first VPN as a first access modality 134, and use, instead, as second a second access modality 134. The second modality may include, for example, a second VPN, a utilization of a DIA, or use an alternative policy for a given period of time. The period of time allows for dynamic updates to the policies 118 to be made as well as to allow for dynamic changes to the access modality 134. Being able to dynamically switch between access modalities 134 optimizes the client connections without compromising security. Thus, a goal of the SNOC 102 is to optimize traffic versus reducing security safety measures.

A second type of policy that may be triggered or violated includes security-based policies where the SNOC 102 seeks to optimize the security performance within the network. Security-based optimization may include client-based network steering and throttling based on security insights obtained from the SNOC 102, the SASE 104, and/or the various security devices (106, 108, 110, 112, 114) of the SASE 104. Client devices that trigger various security detection mechanisms may be subject to a reduced experience based on various risk factors. In some instances, a client device may exhibit malicious behavior. In these instances, the client device may be placed into a quarantine state and segregated from the network, a cloud, or any asset that is being accessed to ensure that data within those networks are not compromised. While segregating the client device from the network is a viable option to maintain security as to the maliciously-acting client device, the SNOC 102 provides a mechanism by which security may be increased to allow the maliciously-acting client device to continue to access the network and reduce the tolerances the client device experiences. This relaxing of security policies may be based on a risk level that does not completely segregate the client device in instances where an operational uptime may take precedence over complete isolation of the client device. A number of security performance metrics may be used by the SNOC 102 to determine a level of threat from devices communicatively coupled to the network. The security performance metrics may include, for example, threat feeds of a connection event in a cloud delivered firewall (CDFW), suspicious domains/uniform resource locators (URLs) in the proxy/DNS security services, large amounts of data transfer, malicious traffic patterns determined through pattern matching communication behavior, among a myriad of other security performance metrics. The security performance metrics may be fed into the SNOC 102 to configure a number of performance-based policies or a policy-based redirect on the client. For example, a client device may access the applications or services via a CDFW, and it may be determined that the destination IP address is a malicious IP address. In this example, the SNOC 102 may redirect the client device for further inspection on the traffic if it is determined to be communicating on port 80/443; a port that is often classified as an open, security risk prone port. The SNOC 102 may identify that the client device is attempting to share a large amount of data based on the traffic pattern. A performance-based policy may be enacted to throttle down the client device traffic to still allow communication. However, the experience may be significantly reduced where operational uptime is preserved for other low overhead activities until it can be fully investigated and determined that the client device needs to be either allowed to do the data transfer or completely denied access. In this manner, the SNOC 102 may create policy configurations as to the applications and/or services the client device is utilizing to reduce a security risk while still maintaining at least a level of network performance.

In the examples described above, the SNOC 102 may configure a number of performance-based policies and a number of security-based polices to obtain the policy configurations 116. The policy configurations may then be used to ensure that both performance and security of the client device is not entirely compromised and may do so in a dynamic manner such that the user of the client device (e.g., the user endpoint 120, the other computing devices 132, or any other devices associated with the SASE 104 may experience reasonable levels of network performance without compromising security. The use of the various security devices (106, 108, 110, 112, 114) of the SASE 104 assist the SNOC 102 in determining the best policy configuration 116 that may be created to address these network performance and security issues in a dynamic manner.

In one example, based at least in part on a trigger being identified, at least one of the policy configurations provided by the SNOC 102 to the SDWAN (acting as a control point) may be to dynamically adjust a QoS to prioritize the traffic or drop other unnecessary traffic. Execution of this policy as defined by the SNOC 102 provides an abstraction layer for SDWAN and leverages security insights to improve network connectivity to a critical application.

In one example, based at least in part on an initial inspection of web traffic traversing the cloud hosted proxy solution by the various security devices (106, 108, 110, 112, 114) of the SASE 104, there may be a temporary inspection of web traffic under suboptimal traffic conditions to determine if there are applications that are deemed business-critical to the user and/or an enterprise the user is affiliated with. In this example, the SNOC 102 may obtain from the security devices (106, 108, 110, 112, 114) a whitelisting of those business-critical applications. The SNOC 102 may create a number of policies 116, 118 to ultimately optimize traffic flow to a proxy device. This white list may be dynamically applied to a proxy auto-config (PAC) file. The PAC file defines how a web browser and other user agents may automatically choose the appropriate proxy server (access modality) for fetching a given URL. In one example, an agent-based client solution may be provided on the user endpoint 120 or a VPN headend device. In this manner, business-critical applications, which may be relatively more trusted, may be prioritized for by way of network performance over security by whitelisting the business-critical applications within the SNOC 102 and creating policies 116, 118 based on the whitelist.

Turning again to FIG. 2, and with continued reference to FIG. 1, the control plane of the system-architecture diagram 200 is the vehicle for client devices and network elements to request and receive a number of policies related to network performance and security and application connectivity policies. In the examples described herein, the control plane is managed via the SNOC 102. In one example, the SNOC 102 may be installed as a function in a SIG 202 or in a cloud provider environment. An administrator of an enterprise, for example, may configure the policies defining access modalities of the applications to align with enterprise's requirements and security policies. The policies 116 configured by the SNOC 102 dictate path selection (access modalities 134) for various applications. In one example, the enterprise may manage the applications. In one example, the applications may be SaaS applications where the company is a cloud consumer of the application services provided by a third party. For example, a user who wants to access Application A 210 may be directed to use a VPN connection to the SIG 202. In contrast, access to Application C 216 may be provided over a corporate VPN (e.g., an enterprise head-end 208). The policy configuration 116 created by the SNOC 102 may be applied in a top-down process, and once a match between the network topology and the policy is found, no further processing may occur. At the end of the policy may be included an implicit rule used to tell the client device how to access applications that do not have a desired access modality (e.g., connection method), such as general internet browsing. In one example, the newly configured policy 116 may be sent to client devices and network elements for execution as policies 118 locally.

In one example, based at least in part on the client device (e.g., the user endpoint 120, the other computing devices 132, or any other devices associated with the SASE 104) booting up, the endpoint security client 122 of the client device, for example, may be executed. The client device may initiate a request to the SNOC 102 to receive a number of policies 118 based on the policy configurations 116 of the SNOC 102. The policies 118 may be pre-programed into the client device at a time when the client device is deployed or installed. The SNOC 102 may push down to the client device a number of policies that are previously configured for local execution at the client device. In this manner, the policies are shared throughout the network with any computing device. In one example, role-based access control (RBAC) defining a number of roles and privileges associated with the client device may be used to provide granular control or customized control as the administrator and/or enterprise deem necessary.

The pushing down of the policies 118 from the SNOC 102 to the client device results in the client device utilizing the policies 118 to direct network traffic among the various access modalities 134 based at least in part on the policies 118. In one example, some of the network traffic may be transmitted over a VPN to an enterprise head-end 208. In this example, the enterprise head-end 208 may provide access to a number of applications and/or services such as Application C 216 where Application C 216 is considered a relatively less risky application such that the SNOC 102 may allow such an access modality with the understanding that Application C 216 is a trusted application as designated by the enterprise.

In one example, some of the network traffic may be transmitted to a SWG 204. In this example, the SWG 204 provides access to a number of applications and/or services including Application B 212. In this example, the SWG 204 may include the SWG 108 of FIG. 1, and may be directly influenced by the SNOC 102 by way of policy configurations 116 and the use of network performance metrics and/or security performance metrics obtained from the SWG 108, 204.

In one example, some of the network traffic may be transmitted over a VPN to a SIG 202. The SIG 202 may provide access to a number of applications and/or services including, for example, Application A 210 as depicted in FIG. 2.

In one example, some of the network traffic may be transmitted over a DIA with DNSSEC 206. In this example, a user may choose to access the applications and other services using a different access modality that provides more efficient network performance but provides a different level of security to the user endpoint such as the DIA-DNSSEC 206. While the DIA may provide relatively better network performance by reducing network latencies, increasing data packet transmissions, and providing a more reliable connection, among other advantages associated with the network performance, the user may be compromising network security. Further, as depicted in FIG. 2, the DIA-DNSSEC 206 may provide access to a number of applications and/or services including a No-Policy Application 214. Therefore, this access modality 134 may be closely monitored by the SNOC 102, the SASE 104, and/or the various security devices (106, 108, 110, 112, 114) of the SASE 104 to obtain network performance metrics as well as security performance metrics to ensure that a level of risk associated with the DIA does not exceed a threshold that may result in the selection of an alternative access modality 134 for at least a time period.

In one example, the network traffic may be transmitted using a plurality of any of the access modalities described herein. For example, the access modules and path selection choices may include a split-tunneling path selection or an endpoint security client 122 (e.g., the AnyConnect^{™} module selection) as described herein. Further, in one example, a number of backup transmission paths may be configured for failover purposes. In this example, the SNOC 102 may switch to a redundant or standby access modality 134 upon the failure or abnormal termination of a previously selected access modality 134. Further, in the examples described herein, the access modalities may include access via or to a third-party cloud network, and a third-party network, among other remote and non-private applications and services provided to a user as a service (aaS).

In one example, if a client device does not include the endpoint security client 122, a bootup sequence may occur on a router device or any edge device that supports the capabilities of the endpoint security client 122. For example, an SD-WAN router may boot up. In response to the SD-WAN router booting up, the SD-WAN router may communicate a vBond which provides the SD-WAN router with specifics about the environment including the existence of the SNOC 102. The SD-WAN router may receive connectivity information from the vBond and create a connection to the SNOC 102. Further, the SD-WAN router may request the policy for internet destined applications, thus enhancing the DIA use-case for SD-WAN.

In one example, if the client device in the above SD-WAN router example does include the endpoint security client 122 with the application path control capability described herein, the policies 118 may be received from the SD-WAN router. In this example, if the client device located behind the SD-WAN router boots up and attempts to communicate with the SNOC 102 in order to download the policies 118, the SD-WAN router may see the request and answer on behalf of the SNOC 102. In this example, the SD-WAN router may respond with instructions in the form of, for example, an app→con table that instructs the client device to send all traffic to the SD-WAN router. In this manner, policy duplication issues may be avoided. If a client device is not behind an application path control capable element such as the SD-WAN router used in this example, then the client device may download the policies 118 to execute on the client locally from another intermediate device or directly from the SNOC 102. If the client device is behind an application path control capable element (e.g., the SD-WAN router), then the client device may receive the policies 118 from that element which steers all traffic towards the element itself as illustrated in, for example, FIG 1.

The above example scenarios are binary in nature as the policies 118 are pre-programmed and executed. However, in one example, the concepts described herein may be expanded and made more dynamic using traffic analytics data, and based at least in part on the analytics data, the policies 118 may be altered dynamically. In this example, the SNOC 102 may be "tapped" into a cloud environment through a network metadata capture and analysis application. The network metadata capture and analysis application may include, for example, an application referred to as "mercury;" a Linux^{™}-based application written in Python^{™} programming language and described at, for example, https://github.com/cisco/mercury. The network metadata capture and analysis application may receive the traffic analytics data from its connection or association to applications in the cloud. A number of virtual network interface cards (vNICs) included within the SNOC 102 may connect into virtual personal computers (vPCs) or virtual networks (vNETs) in the cloud provider environment, or in the application stack itself, in order to monitor network traffic flows and obtain data the traffic analytics data to determine network performance metrics and security performance metrics. As described herein, the network performance metrics and security performance metrics may be used by the SNOC 102 to dynamically configure any policies 116 including pre-programmed policies found within the client device. In one example where a SIG 202 is deployed within the cloud network as depicted in FIG. 2, the SNOC 102 may include a mercury-enabled vNIC connected to both a SWG 204 and an application profile that is hosted in the cloud environment.

In one example, the SNOC 102, the SASE 104, and/or the various security devices (106, 108, 110, 112, 114) of the SASE 104 may benefit from the functionality of a security monitoring system 218. The security monitoring system 218 may be communicatively coupled to the SNOC 102 directly or indirectly, or via a network such as a cloud network. In one example, the security monitoring system 218 may provide a number of playbook configuration and initiation processes where pre-built playbooks and user-generated playbooks may be executed to extract observable security issues, determine a verdict for the observable security issues, detect targets involved in the security issues, and/or take mitigation and/or preventative actions such as isolating the targets involved and blocking malicious domains, among other security tasks. The security monitoring system 218 may include aspects and functionalities of a security information and event management (SIEM) application, a secure operations center (SOC), and/or a security orchestration, automation, and response (SOAR) program. In one example, SNOC may interact with the security monitoring system 218 and/or initiate automated capabilities that assist the SNOC 102 in identifying security-related instances and orchestrate security responses in an autonomous manner. Further, in one example, the SNOC 102 may push policy configurations 116 to the security monitoring system 218 in the form of the policies 118 to allow the security monitoring system 218 to utilize the policies 118 in providing its security functions.

Although a client device is described above in connection with FIG. 2 as the device interacting with the network architecture, the client device may include the user endpoint 120, any of the other computing devices 132, and/or any computing device described herein or communicatively coupled to the network architecture and the SNOC 102.

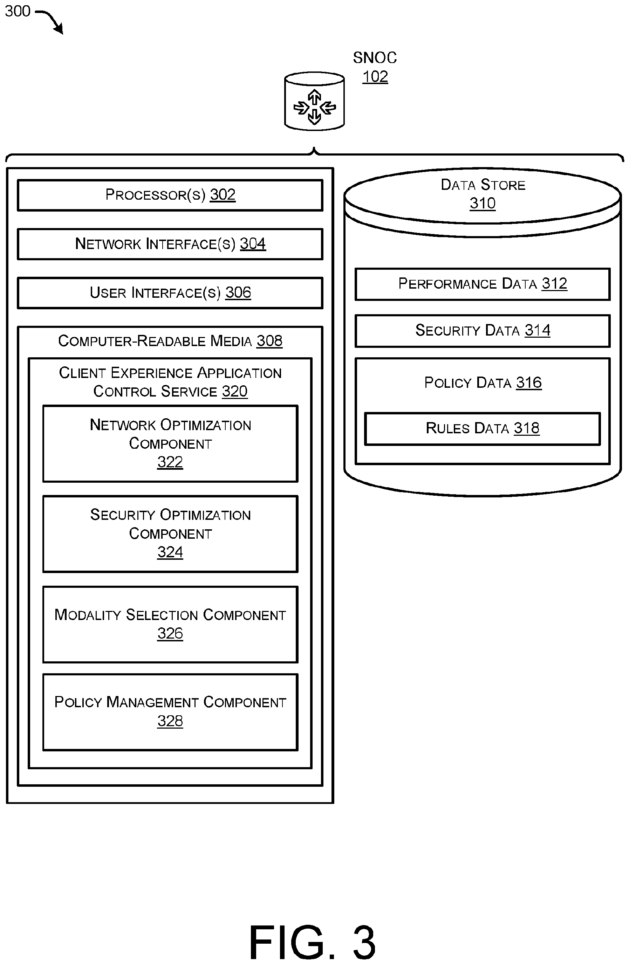

FIG. 3 is a component diagram 300 of example components of a SNOC 102, according to an example of the principles described herein. As illustrated, the SNOC 102 may include one or more hardware processor(s) 302, one or more devices, configured to execute one or more stored instructions. The processor(s) 302 may comprise one or more cores. Further, the SNOC 102 may include one or more network interfaces 304 configured to provide communications between the SNOC 102 and other devices, such as devices associated with the SASE 104, the user endpoint 120, the other computing devices 132, devices associated with the DNS layer security 106 services, the SWG 108 services, the firewall 110 services, the CASB 112 services, and the ITI 114 services, devices associated with a cloud service, the SIG 202, the SWG 204, the DIA-DNSSEC 206, the enterprise head-end 208, and/or other systems or devices associated with the SNOC 102 and/or remote from the SNOC 102. The network interfaces 304 may include devices configured to couple to personal area networks (PANs), wired and wireless local area networks (LANs), wired and wireless wide area networks (WANs), and so forth. For example, the network interfaces 304 may include devices compatible with the SASE 104, the user endpoint 120, the other computing devices 132, devices associated with the DNS layer security 106 services, the SWG 108 services, the firewall 110 services, the CASB 112 services, and the ITI 114 services, devices associated with a cloud service, the SIG 202, the SWG 204, the DIA-DNSSEC 206, the enterprise head-end 208, and/or other systems or devices associated with the SNOC 102 and/or remote from the SNOC 102.

The SNOC 102 may also include a user interface 306. The user interface 306 may allow a user such as an administrator to interact with the SNOC 102 to instruct the SNOC 102 to perform its functions including, for example, engage in policy configurations 116, execute and maintain policies 118 within a network environment, and push policies 118 to a number of associated computing devices, among other functions described herein.

The SNOC 102 may also include computer-readable media 308 that stores various executable components (e.g., software-based components, firmware-based components, etc.). In addition to various components discussed herein, the computer-readable media 308 may further store components to implement functionality described herein. While not illustrated, the computer-readable media 308 may store one or more operating systems utilized to control the operation of the one or more devices that comprise the SNOC 102. According to one example, the operating system comprises the LINUX operating system. According to another example, the operating system(s) comprise the WINDOWS SERVER operating system from MICROSOFT Corporation of Redmond, Washington. According to further examples, the operating system(s) may comprise the UNIX operating system or one of its variants. It may be appreciated that other operating systems may also be utilized.

Additionally, the SNOC 102 may include a data store 310 which may comprise one, or multiple, repositories or other storage locations for persistently storing and managing collections of data such as databases, simple files, binary, and/or any other data. The data store 310 may include one or more storage locations that may be managed by one or more database management systems. The data store 310 may store, for example, performance data 312 defining network performance metrics and security performance metrics obtained from the various security devices (106, 108, 110, 112, 114) of the SASE 104, and other services that may be operated via the SASE 104. Further, the data store 310 may store security data 312. The security data 312 may include any data obtained by the SNOC 102 regarding the security of the devices communicatively coupled to the SNOC 102. For example, the security data 314 may include whitelists, blacklists, and/or greylists of applications executed within the network environment of the SNOC 102, a list of malware, botnet, and phishing domain and IP whitelists and blacklists, other data defining the security of the devices communicatively coupled to the SNOC 102, and combinations thereof.

The data store 310 may also store policy data 316. Policy data 316 may include any data defining past and/or currently configured and/or executed policies within the SNOC 102 including the policy configurations 116 and the policies 118 pushed to other computing devices within the network environment. In one example, the policies may be created by an enterprise utilizing the SNOC 102 and stored in the data store 310 of the SNOC 102 such that the SNOC 102 may apply them to the management of the computing devices within the network environment.

Still further, the policy data 316 stored within the data store 310 may include rules data 318 that support or define the policy data 316. The rules data 318 may include the executable code to enforce the policies 118 within the network environment.

The computer-readable media 308 may store portions, or components, of a client experience application control service 320. For instance, the client experience application control service 320 of the computer-readable media 308 may include a network optimization component 322 to, when executed by the processor(s) 302, optimize the network performance of a client device such as the user endpoint 120 and/or other computing devices 132. The network optimization component 322 may obtain information such as security and intelligence data from the various security devices (106, 108, 110, 112, 114) of the SASE 104 in executing the policies 118 on behalf of the client devices. Further, the network optimization component 322 may assist in determining when a different access modality 134 is to be implemented for the client device and/or function to implement the different access modality 134.

The client experience application control service 320 may also include a security optimization component 324 to, when executed by the processor(s) 302, obtain security intelligence data from the various security devices (106, 108, 110, 112, 114) of the SASE 104, and other services including the security monitoring system 218 according to the techniques described herein. The security optimization component 324 may also collect security data associated with accessing and utilizing the devices described herein. Further, the security optimization component 324 may also collect security data whitelists, blacklists, and/or grey lists of applications executed within the network environment of the SNOC 102, a list of malware, botnet, and phishing domain and IP whitelists and blacklists, other data defining the security of the devices communicatively coupled to the SNOC 102, and combinations thereof. The security optimization component 324 may store the data collected in the performance data 312, the security data 314 and/or the policy data 316 of the data store 310 as described herein.

The client experience application control service 320 may also include a modality selection component 326 to, when executed by the processor(s) 302, select an alternative access modality 134 for a client device in response to at least one of the policies 118 being violated. The modality selection component 326, when executed by the processor(s) 302, may also determine when a time period has elapsed wherein an original access modality 134 is again utilized after switching to an alternate access modality 134. In one example, the modality selection component 326 may be executed by the processor(s) 302 in response to security performance metrics and/or network performance metrics provided by the various security devices (106, 108, 110, 112, 114) of the SASE 104 defining a state at which the access modality 134 utilized by the client device is to be switched based on the policy configurations 116 defined by the policy management component 328 of the SNOC 102.

The client experience application control service 320 may also include the policy management component 328 to, when executed by the processor(s) 302, configure a number of policies 116 based on the data collected by the network optimization component 322 and/or the security optimization component 324. Further, the policy management component 328 may also, when executed by the processor(s) 302, push the policies 118 down to a number of computing devices within the network environment including, for example, the user endpoint 120, the other computing devices 132, and/or other computing devices described herein. Still further, the policy management component 328 may also, when executed by the processor(s) 302, stored the configured policies 116, 118 in the data store 310 as the policy data 316. Even still further, the policy management component 328 may also, when executed by the processor(s) 302, execute the policies 118 in response to a violation of the policies 118.

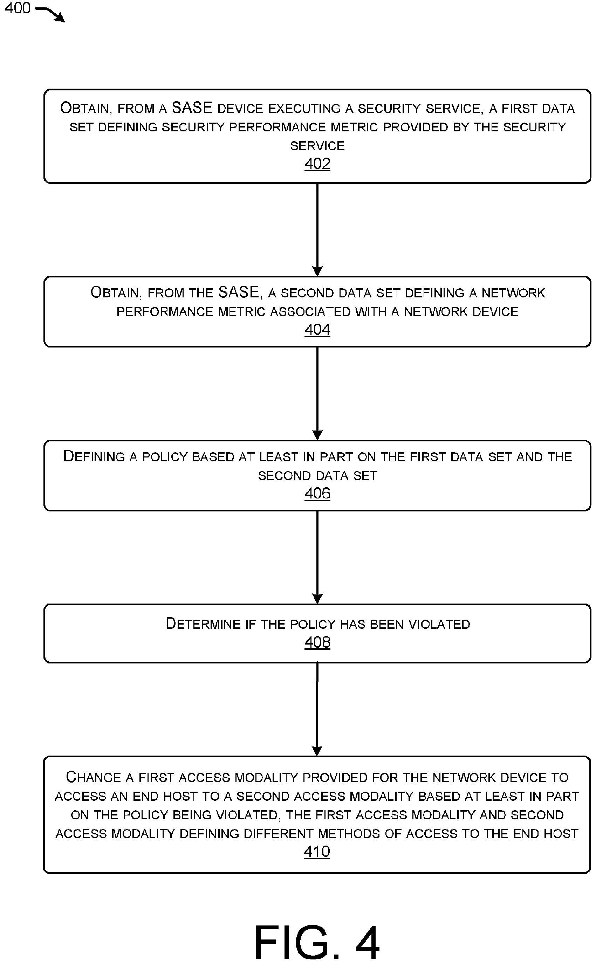

FIG. 4 illustrates a flow diagram 400 of an example method managing access modalities of a user endpoint 120 via the SNOC 102, according to an example of the principles described herein. The method of FIG. 4 may include, at 402, obtaining at the SNOC 102 and from the SASE 104 device executing at least one security service (e.g., the DNS layer security 106 services, the SWG 108 services, the firewall 110 services, the CASB 112 services, the ITI 114 services, and other services provided by the SASE 104 according to the techniques described herein), a first data set defining security performance metrics provided by the security service (106, 108, 110, 112, 114). The SNOC 102 may utilize the security optimization component 324, executed by the processor(s) 302, to obtain the first data set defining the security performance metrics. At 404, the method may include obtaining, from the SASE 104 device, executing the at least one security service (106, 108, 110, 112, 114), a second data set defining a network performance metrics associated with a network device. The SNOC 102 may utilize the network optimization component 324, executed by the processor(s) 302, to obtain the second data set defining the network performance metrics.

At 406, the method may include defining a policy 116, 118 based at least in part on the first data set and the second data set. The SNOC 102 may create the policy configurations 116 as well as the policies 118 for the user endpoint 120 and other computing devices 132. The SNOC 102 may utilize the policy management component 328 to, when executed by the processor(s) 302, define the policies 116, 118 at 406. In one example, defining the policy may include updating an existing policy based at least in part on the first data set and the second data set. Further, in one example, defining the policy may include determining if an application executed by the end host is on a whitelist, and, based at least in part on the application being executed by the end host is on the whitelist, defining the policy to allow access to the second access modality 134, the second access modality 134 having a different level of security risk relative to the first access modality. Access to the second access modality 134 may be provided based at least in part on the policy being violated as described herein in connection with 408.

With the processor(s) 302 executing the policy management component 328, the method may include determining if a policy 118 has been violated at 408. Violation of the policy may be detected by the SNOC 102 and may include, for example, at least one of the network performance metrics and security performance metrics passing a threshold defined by the policy 118.

In one example, the security performance metric provided by the security service includes a metric provided by the DNS layer security 106 service, the SWG 108 service, the firewall 110 service, the CASB 112 service, the ITI 114 service, and combinations thereof. Further, determining if the policy 118 has been violated at 408 includes determining if the security performance metric violates a threshold. Further, the network performance metric associated with a network device may include a data transfer rate, a communication latency, or a session duration, and determining if the policy has been violated at 408 includes determining if the network performance metric violates a threshold set regarding the network performance metric.

At 410, the method may include changing a first access modality 134 provided for the network device to access an end host to a second access modality 134 based at least in part on the policy 118 being violated. The first access modality 134 and the second access modality 134 define different methods of access for or to the end host. In the method of FIG. 4, the network devices may include, for example, the user endpoint 120, the other computing devices 132, or any other devices associated with the SASE 104 to access applications and/or utilize services provided via a computing network. Further, the end host may include any application and/or service and their associated hardware and network architecture that support the application and/or service.

In one example, the policy 118 may define a time period to use the second access modality 134. In this example, changing the first access modality 134 to the second access modality 134 at 410 may include utilizing the second access modality 134 for the time period, and changing back to the first access modality 134 or another access modality 134 based at least in part on an expiration of the time period.

The method of FIG. 4 provides for the functionality of a cross architecture controller (e.g., the SNOC 102) that continuously monitors and optimizes network performance based on security insights received from a security suite (e.g., services provide by the SASE 104) at a user level application experience. An integrated closed loop security and network telemetry automated solution is provided by the SASE 104 and the SNOC 102 executing the method of FIG. 4. Further, with the SASE 104 and the SNOC 102, the method of FIG. 4 provides the ability to maintain a user's experience with applications and services provided via the network including access to the application while maintaining security controls. The differentiated and relational access modalities 134 allow a user to deal with any network and security parameter or KPI as an adjustable or configurable parameter to optimize user performance. Still further, the method of FIG. 4, utilizing the functionality of the SASE 104 and the SNOC 102, provides a converged network and agent/client-based solution with the ability to measure real time user-experience and subsequently adjusting network, security, and/or application polices to maintain a security and user experience level. Further, the network may be optimized based at least in part on performance or threat related re-routing or throttling of traffic using the policies created and/or updated by the SNOC 102.

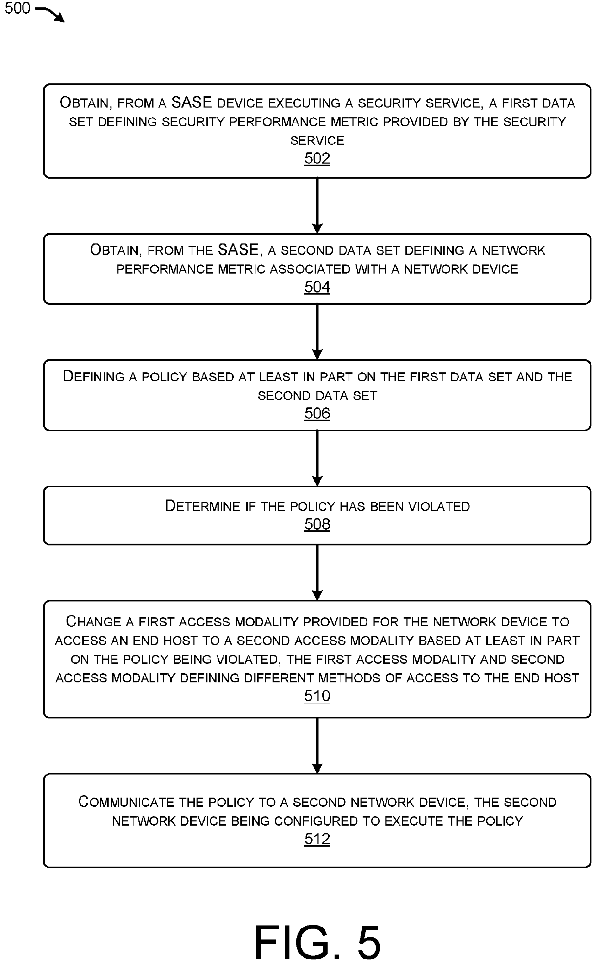

FIG. 5 illustrates a flow diagram 500 of an example method for managing access modalities of a user endpoint 120 via the SNOC 102, according to an example of the principles described herein. The method of FIG. 5 may include, at 502, obtaining a first data set defining security performance metrics provided by the security service (106, 108, 110, 112, 114) as described above in connection with FIG. 4 at 402. Similarly, at 504, the method may include obtaining a second data set defining a network performance metric associated with a network device as described above in connection with FIG. 4 at 404. At 506, the method may include defining a policy 116, 118 based at least in part on the first data set and the second data set as described above in connection with FIG. 4 at 406. Further, the method may include determining if a policy 118 has been violated at 508 and as described above in connection with FIG. 4 at 408. At 510, the method may include changing a first access modality 134 provided for the network device to access an end host to a second access modality 134 based at least in part on the policy 118 being violated as described above in connection with FIG. 4 at 410. The first access modality 134 and the second access modality 134 define different methods of access for or to the end host. In the method of FIG. 4, the network devices may include, for example, the user endpoint 120, the other computing devices 132, or any other devices associated with the SASE 104 to access applications and/or utilize services provided via a computing network. Further, the end host may include any application and/or service and their associated hardware and network architecture that support the application and/or service.

At 512, the method may include communicating the policy to at least a second network device. In one example, the second network device may be configured to execute the policy. The policy management component 328, executed by the processor(s) 302, of the SNOC 102 may configure the policies based at least in part on the first data set defining security performance metrics and the second data set defining a network performance metrics provided by the security service (106, 108, 110, 112, 114) and push the policy configurations 116 to the user endpoint 120, the other computing devices 132, and/or any other device coupled to the network system. Further, at 512, the policies may be pushed to these computing devices based at least in part on a new policy being created and/or an existing policy being updated by the SNOC 102.

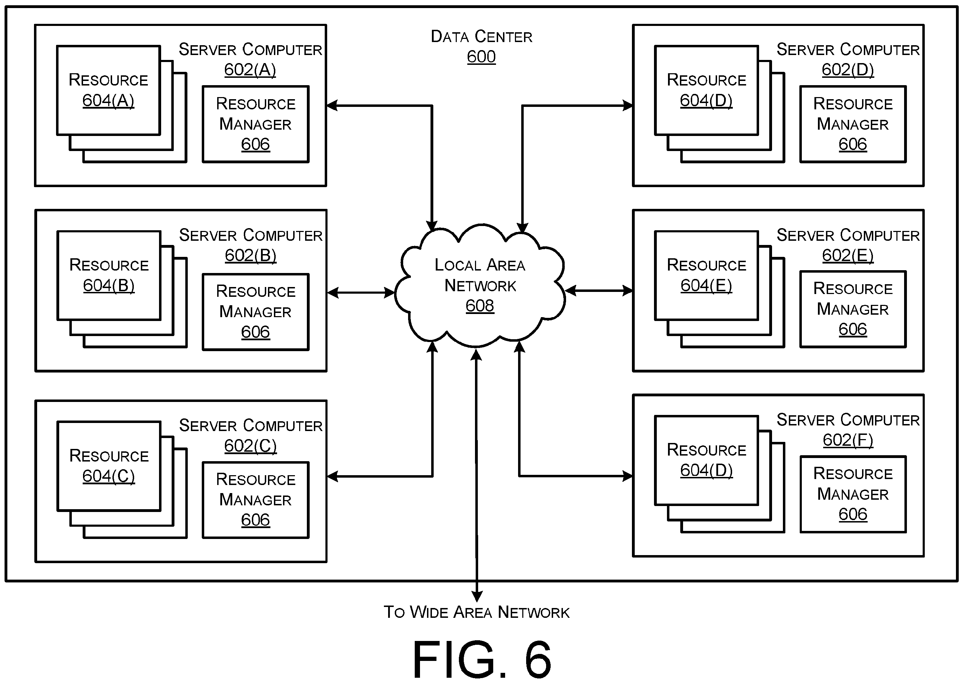

FIG. 6 a computing system diagram illustrating a configuration for a data center 600 that may be utilized to implement aspects of the technologies disclosed herein. The example data center 600 shown in FIG. 6 includes several server computers 602A-602F (which might be referred to herein singularly as "a server computer 602" or in the plural as "the server computers 602) for providing computing resources. In some examples, the resources and/or server computers 602 may include, or correspond to, any type of networked device described herein. Although described as servers, the server computers 602 may comprise any type of networked device, such as servers, switches, routers, hubs, bridges, gateways, modems, repeaters, access points, endpoints, etc.

The server computers 602 may be standard tower, rack-mount, or blade server computers configured appropriately for providing computing resources. In some examples, the server computers 602 may provide computing resources 604 including data processing resources such as VM instances or hardware computing systems, database clusters, computing clusters, storage clusters, data storage resources, database resources, networking resources, virtual private networks (VPNs), and others. Some of the server computers 602 may also be configured to execute a resource manager 606 capable of instantiating and/or managing the computing resources. In the case of VM instances, for example, the resource manager 606 may be a hypervisor or another type of program configured to enable the execution of multiple VM instances on a single server computer 602. Server computers 602 in the data center 600 may also be configured to provide network services and other types of services.

In the example data center 600 shown in FIG. 6, an appropriate LAN 608 is also utilized to interconnect the server computers 602A-502F. It may be appreciated that the configuration and network topology described herein has been greatly simplified and that many more computing systems, software components, networks, and networking devices may be utilized to interconnect the various computing systems disclosed herein and to provide the functionality described above. Appropriate load balancing devices or other types of network infrastructure components may also be utilized for balancing a load between data centers 600, between each of the server computers 602A-502F in each data center 600, and, potentially, between computing resources in each of the server computers 602. It may be appreciated that the configuration of the data center 600 described with reference to FIG. 6 is merely illustrative and that other implementations may be utilized.

In one example, the server computers 602 and or the computing resources 604 may each execute/host one or more tenant containers and/or virtual machines to perform techniques described herein.

In one example, the data center 600 may provide computing resources, like tenant containers, VM instances, VPN instances, and storage, on a permanent or an as-needed basis. Among other types of functionality, the computing resources provided by a cloud computing network may be utilized to implement the various services and techniques described above. The computing resources 604 provided by the cloud computing network may include various types of computing resources, such as data processing resources like tenant containers and VM instances, data storage resources, networking resources, data communication resources, network services, VPN instances, and the like.

Each type of computing resource 604 provided by the cloud computing network may be general-purpose or may be available in a number of specific configurations. For example, data processing resources may be available as physical computers or VM instances in a number of different configurations. The VM instances may be configured to execute applications, including web servers, application servers, media servers, database servers, some or all of the network services described above, and/or other types of programs. Data storage resources may include file storage devices, block storage devices, and the like. The cloud computing network may also be configured to provide other types of computing resources 604 not mentioned specifically herein.

The computing resources 604 provided by a cloud computing network may be enabled in one example by one or more data centers 600 (which might be referred to herein singularly as "a data center 600" or in the plural as "the data centers 600). The data centers 600 are facilities utilized to house and operate computer systems and associated components. The data centers 600 may include redundant and backup power, communications, cooling, and security systems. The data centers 600 may also be located in geographically disparate locations. One illustrative example for a data center 600 that may be utilized to implement the technologies disclosed herein is described herein with regard to, for example, FIGS. 1, 2, and 3.

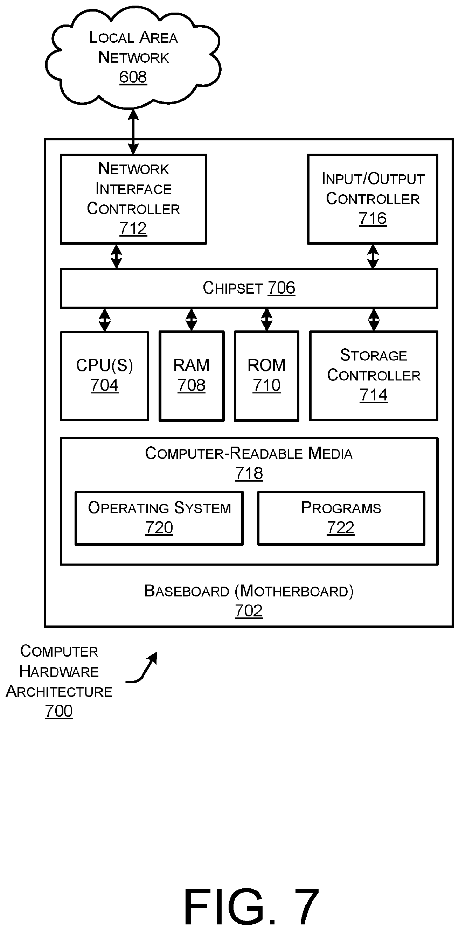

FIG. 7 illustrates a computer architecture diagram showing an example computer hardware architecture 700 for implementing a computing device that may be utilized to implement aspects of the various technologies presented herein. The computer hardware architecture 700 shown in FIG. 7 illustrates the SNOC 102, the SASE 104, the DNS layer security 106 services, the SWG 108 services, the firewall 110 services, the CASB 112 services, and the ITI 114 services, and/or other systems or devices associated with the SASE 104 and/or the SNOC 102 and/or remote from the SASE 104 and/or SNOC 102, the user endpoint 120, the other computing device 132 including, for example, a private SD-WAN 124, a corporate SD-WAN 126, network devices 128, a VPN devices 130, a workstation, a desktop computer, a laptop, a tablet, a network appliance, an e-reader, a smartphone, a mobile phone, a server, a router, an Internet-of-Things (IoT) device, or other computing device, and may be utilized to execute any of the software components presented herein. The computer 700 may, in some examples, correspond to a network device (e.g., the SASE 104 and/or the SNOC 102 (and associated devices) described herein, and may comprise networked devices such as servers, switches, routers, hubs, bridges, gateways, modems, repeaters, access points, etc.

The computer 700 includes a baseboard 702, or "motherboard," which is a printed circuit board to which a multitude of components or devices may be connected by way of a system bus or other electrical communication paths. In one illustrative configuration, one or more central processing units (CPUs) 704 operate in conjunction with a chipset 706. The CPUs 704 may be standard programmable processors that perform arithmetic and logical operations necessary for the operation of the computer 700.

The CPUs 704 perform operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements may be combined to create more complex logic circuits, including registers, adders-subtractors, arithmetic logic units, floating-point units, and the like.

The chipset 706 provides an interface between the CPUs 704 and the remainder of the components and devices on the baseboard 702. The chipset 706 may provide an interface to a RAM 708, used as the main memory in the computer 700. The chipset 706 may further provide an interface to a computer-readable storage medium such as a read-only memory (ROM) 710 or non-volatile RAM (NVRAM) for storing basic routines that help to startup the computer 700 and to transfer information between the various components and devices. The ROM 710 or NVRAM may also store other software components necessary for the operation of the computer 700 in accordance with the configurations described herein.

The computer 700 may operate in a networked environment using logical connections to remote computing devices and computer systems through a network, such as the SASE 104. The chipset 706 may include functionality for providing network connectivity through a Network Interface Controller (NIC) 712, such as a gigabit Ethernet adapter. The NIC 712 is capable of connecting the computer 700 to other computing devices over the WSN 100. It may be appreciated that multiple NICs 712 may be present in the computer 700, connecting the computer to other types of networks and remote computer systems. In some examples, the NIC 712 may be configured to perform at least some of the techniques described herein, such as obtaining network and/or security performance metric(s), perform policy configuration based at least in part on the network and/or security performance metric(s), execution of the policies, adjustment of access modalities based at least in part on the policies, and/or other techniques described herein.

The computer 700 may be connected to a storage device 718 that provides non-volatile storage for the computer. The storage device 718 may store an operating system 720, programs 722, and data, which have been described in greater detail herein. The storage device 718 may be connected to the computer 700 through a storage controller 714 connected to the chipset 706. The storage device 718 may consist of one or more physical storage units. The storage controller 714 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computer 700 may store data on the storage device 718 by transforming the physical state of the physical storage units to reflect the information being stored. The specific transformation of physical state may depend on various factors, in different examples of this description. Examples of such factors may include, but are not limited to, the technology used to implement the physical storage units, whether the storage device 718 is characterized as primary or secondary storage, and the like.

For example, the computer 700 may store information to the storage device 718 by issuing instructions through the storage controller 714 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible, with the foregoing examples provided only to facilitate this description. The computer 700 may further read information from the storage device 718 by detecting the physical states or characteristics of one or more particular locations within the physical storage units.

In addition to the storage device 718 described above, the computer 700 may have access to other computer-readable storage media to store and retrieve information, such as program modules, data structures, or other data. It may be appreciated by those skilled in the art that computer-readable storage media is any available media that provides for the non-transitory storage of data and that may be accessed by the computer 700. In some examples, the operations performed by the SNOC 102 and/or the SASE 104 and or any components included therein, may be supported by one or more devices similar to computer 700. Stated otherwise, some or all of the operations performed by the SNOC 102 and/or the SASE 104, and or any components included therein, may be performed by one or more computer devices operating in a cloud-based arrangement. By way of example, and not limitation, computer-readable storage media may include volatile and non-volatile, removable and non-removable media implemented in any method or technology. Computer-readable storage media includes, but is not limited to, RAM, ROM, erasable programmable ROM (EPROM), electrically-erasable programmable ROM (EEPROM), flash memory or other solid-state memory technology, compact disc ROM (CD-ROM), digital versatile disk (DVD), high definition DVD (HD-DVD), BLU-RAY, or other optical storage, magnetic cassettes, magnetic tape, magnetic disk storage or other magnetic storage devices, or any other medium that may be used to store the desired information in a non-transitory fashion.

As mentioned briefly above, the storage device 718 may store an operating system 720 utilized to control the operation of the computer 700. According to one example, the operating system 720 comprises the LINUX operating system. According to another example, the operating system comprises the WINDOWS^{®} SERVER operating system from MICROSOFT Corporation of Redmond, Washington. According to further examples, the operating system may comprise the UNIX operating system or one of its variants. It may be appreciated that other operating systems may also be utilized. The storage device 718 may store other system or application programs and data utilized by the computer 700.

In one example, the storage device 718 or other computer-readable storage media is encoded with computer-executable instructions which, when loaded into the computer 700, transform the computer from a general-purpose computing system into a special-purpose computer capable of implementing the examples described herein. These computer-executable instructions transform the computer 700 by specifying how the CPUs 704 transition between states, as described above. According to one example, the computer 700 has access to computer-readable storage media storing computer-executable instructions which, when executed by the computer 700, perform the various processes described above with regard to FIGS. 1-6. The computer 700 may also include computer-readable storage media having instructions stored thereupon for performing any of the other computer-implemented operations described herein.

The computer 700 may also include one or more input/output controllers 716 for receiving and processing input from a number of input devices, such as a keyboard, a mouse, a touchpad, a touch screen, an electronic stylus, or other type of input device. Similarly, an input/output controller 716 may provide output to a display, such as a computer monitor, a flat-panel display, a digital projector, a printer, or other type of output device. It will be appreciated that the computer 700 might not include all of the components shown in FIG. 7, may include other components that are not explicitly shown in FIG. 7, or might utilize an architecture completely different than that shown in FIG. 7.

As described herein, the computer 700 may comprise one or more of the SNOC 102, the SASE 104, the DNS layer security 106 services, the SWG 108 services, the firewall 110 services, the CASB 112 services, and the ITI 114 services, and/or other systems or devices associated with the SASE 104 and/or the SNOC 102 and/or remote from the SASE 104 and/or SNOC 102, the user endpoint 120, the other computing device 132 including the private SD-WAN 124, a corporate SD-WAN 126, network devices 128, a VPN devices 130, a workstation, a desktop computer, a laptop, a tablet, a network appliance, an e-reader, a smartphone, a mobile phone, a server, a router, an Internet-of-Things (IoT) device, and/or other systems or devices associated with the SNOC 102 and/or remote from the SNOC 102. The computer 700 may include one or more hardware processor(s) such as the CPUs 704 configured to execute one or more stored instructions. The CPUs 704 may comprise one or more cores. Further, the computer 700 may include one or more network interfaces configured to provide communications between the computer 700 and other devices, such as the communications described herein as being performed by the SNOC 102, the SASE 104, and other devices described herein. The network interfaces may include devices configured to couple to personal area networks (PANs), wired and wireless local area networks (LANs), wired and wireless wide area networks (WANs), and so forth. For example, the network interfaces may include devices compatible with Ethernet, Wi-Fi^{™}, and so forth.

The programs 722 may comprise any type of programs or processes to perform the techniques described in this disclosure for a SNOC 102 which will be offered through the SASE 104 and provides services of the SNOC 102 in order to obtain network and/or security performance metric(s), perform policy configuration based at least in part on the network and/or security performance metric(s), execution of the policies, adjustment of access modalities based at least in part on the policies, and/or other techniques described herein. The programs 722 may enable the devices described herein to perform various operations.

### Conclusion

The SASE 104 and the SNOC 102 serve to provide a cross architecture controller (e.g., the SNOC 102) that continuously monitors and optimizes network performance based on security insights received from a security suite (e.g., services provide by the SASE 104) at a user level application experience. An integrated closed loop security and network telemetry automated solution is provided by the SASE 104 and the SNOC 102. Further, the SASE 104 and the SNOC 102 provide the ability to maintain a user's experience with applications and services provided via the network including access to the application while maintaining security controls. The differentiated and relational access modalities 134 allow a user to deal with any network and security parameter or KPI as an adjustable or configurable parameter to optimize user performance. Still further, the SASE 104 and the SNOC 102 provide a converged network and agent/client-based solution with the ability to measure real time user-experience and subsequently adjusting network, security, and/or application polices to maintain a security and user experience level. Further, the network may be optimized based at least in part on performance or threat related re-routing or throttling of traffic using the policies created and/or updated by the SNOC 102.

The SASE 104 and its SNOC 102 provide for a converged system where a plurality of network and security devices identify at least one KPI indicative of a performance value (e.g., a performance degradation in network or security). In one example, depending on a criticality of the application being accessed, a control signal may be sent to the user endpoint 120 and/or the other computing devices 132 to direct traffic over a different access modality 134 (e.g., connectivity method) and/or dynamically modify quality of service (QoS) settings on a secure SD-WAN overlay provided by the SASE 104 for a period of time such as in instances where there exist communication links that maybe unstable (e.g., satellite, cellular, or degraded internet communication links).

In summary, a network optimization controller (NOC) performs operations including obtaining, from a secure access service edge (SASE) device executing a security service, a first data set defining a security performance metric provided by the security service, and obtaining, from the SASE, a second data set defining a network performance metric associated with a network device. The operations further include defining a policy based at least in part on the first data set and the second data set, determining if the policy has been violated, and changing a first access modality provided for the network device to access an end host to a second access modality based at least in part on the policy being violated. The first access modality and the second access modality define different methods of access to the end host.

While the present systems and methods are described with respect to the specific examples, it is to be understood that the scope of the present systems and methods are not limited to these specific examples. Since other modifications and changes varied to fit particular operating requirements and environments will be apparent to those skilled in the art, the present systems and methods are not considered limited to the example chosen for purposes of disclosure.

Although the application describes examples having specific structural features and/or methodological acts, it is to be understood that the claims are not necessarily limited to the specific features or acts described. Rather, the specific features and acts are merely illustrative some examples that fall within the scope of the claims of the application.

## Claims

1. A network optimization controller (NOC) comprising:
one or more processors; and
one or more non-transitory computer-readable media storing instructions that, when executed by the one or more processors, cause the one or more processors to perform operations comprising:
obtaining (402), from a secure access service edge (SASE) device executing a security service, a first data set defining a security performance metric provided by the security service;
obtaining (404), from the SASE, a second data set defining a network performance metric associated with a network device;
defining (406) a policy based at least in part on the first data set and the second data set;
determining (408) if the policy has been violated; and
changing (410) a first access modality provided for the network device to access an end host to a second access modality based at least in part on the policy being violated, the first access modality and the second access modality defining different methods of access to the end host, wherein the policy defines a time period to use the second access modality, and
wherein changing (410) the first access modality to the second access modality includes:
utilizing the second access modality for the time period; and
changing to the first access modality based at least in part on an expiration of the time period.

2. The NOC of claim 1, wherein defining (406) the policy includes updating a baseline policy based at least in part on the first data set and the second data set, the baseline policy being a preconfigured policy and/or wherein defining the policy includes:
determining if an application executed by the end host is on a whitelist; and
based at least in part on the application being executed by the end host is on the whitelist, defining the policy to allow access to the second access modality, the second access modality having a different level of security risk relative to the first access modality.

3. The NOC of any of claims 1 to 2, the operations further comprising communicating the policy to a second network device, the second network device being configured to execute the policy.

4. The NOC of any of claims 1 to 3, wherein the security performance metric provided by the security service includes a metric provided by a domain name system (DNS) layer security service, a secure web gateway (SWG) service, a firewall service, a cloud access security broker (CASB) service, an interactive threat intelligence service, and combinations thereof, and
wherein determining (408) if the policy has been violated includes determining if the security performance metric violates a threshold.

5. The NOC of any of claims 1 to 4, wherein the network performance metric associated with the network device includes a data transfer rate, a communication latency, or a session duration, and
wherein determining (408) if the policy has been violated includes determining if the network performance metric violates a threshold.

6. A method (400) comprising:
obtaining (402), from a secure access service edge (SASE) device executing a security service, a first data set defining security performance metric provided by the security service;
obtaining (404), from the SASE, a second data set defining a network performance metric associated with a network device;
defining (406) a policy based at least in part on the first data set and the second data set;
determining (408) if the policy has been violated; and
changing (410) a first access modality provided for the network device to access an end host to a second access modality based at least in part on the policy being violated, the first access modality and the second access modality defining different methods of access to the end host, wherein the policy defines a time period to use the second access modality, and
wherein changing (410) the first access modality to the second access modality includes:
utilizing the second access modality for the time period; and
changing to the first access modality based at least in part on an expiration of the time period.

7. The method (400) of claim 6, wherein defining (406) the policy includes updating an existing policy based at least in part on the first data set and the second data set.

8. The method (400) of claim 6 or 7, wherein defining (46) the policy includes:
determining if an application executed by the end host is on a whitelist; and
based at least in part on the application being executed by the end host is on the whitelist, defining the policy to allow access to the second access modality, the second access modality having a different level of security risk relative to the first access modality.

9. The method (400) of any of claims 6 to 8, further comprising communicating the policy to a second network device, the second network device being configured to execute the policy.

10. The method (400) of any of claims 6 to 9, wherein the security performance metric provided by the security service includes a metric provided by a domain name system (DNS) layer security service, a secure web gateway (SWG) service, a firewall service, a cloud access security broker (CASB) service, an interactive threat intelligence service, and combinations thereof, and
wherein determining (408) if the policy has been violated includes determining if the security performance metric violates a threshold.

11. The method (400) of any of claims 6 to 10, wherein the network performance metric associated with the network device includes a data transfer rate, a communication latency, or a session duration, and
wherein determining (408) if the policy has been violated includes determining if the network performance metric violates a threshold.

12. Apparatus comprising:
means for obtaining (402), from a secure access service edge (SASE) device executing a security service, a first data set defining security performance metric provided by the security service;
means for obtaining (404), from the SASE, a second data set defining a network performance metric associated with a network device;
means for defining (406) a policy based at least in part on the first data set and the second data set;
means for determining (408) if the policy has been violated; and
means for changing (410) a first access modality provided for the network device to access an end host to a second access modality based at least in part on the policy being violated, the first access modality and the second access modality defining different methods of access to the end host,
wherein the policy defines a time period to use the second access modality, and
wherein changing (410) the first access modality to the second access modality includes:
utilizing the second access modality for the time period; and
changing to the first access modality based at least in part on an expiration of the time period;
optionally further comprising means for implementing the method (400) according to any of claims 7 to 11.

13. A computer program, computer program product or computer readable medium comprising instructions which, when executed by a computer, cause the computer to carry out the steps of the method (400) of any of claims 6 to 11.

## Patentansprüche

1. Netzwerkoptimierungssteuerung (NOC), umfassend:
einen oder mehrere Prozessoren und
ein oder mehrere nichtflüchtige computerlesbare Medien, die Anweisungen speichern, die bei Ausführung durch den einen oder die mehreren Prozessoren bewirken, dass der eine oder die mehreren Prozessoren Arbeitsschritte durchführen, umfassend:
Beziehen (402) eines ersten Datensatzes, der eine Sicherheitsleistungsmetrik definiert, die von einem Sicherheitsdienst bereitgestellt wird, von einer Secure-Access-Service-Edge-Vorrichtung (SASE-Vorrichtung), die den Sicherheitsdienst ausführt;
Beziehen (404) eines zweiten Datensatzes, der eine Netzwerkleistungsmetrik definiert, die mit einer Netzwerkvorrichtung assoziiert ist, von der SASE;
Definieren (406) einer Richtlinie zumindest zum Teil auf der Basis des ersten Datensatzes und des zweiten Datensatzes;
Bestimmen (408), ob die Richtlinie verletzt wurde; und
Ändern (410) einer ersten Zugriffsmodalität, die für die Netzwerkvorrichtung bereitgestellt wird, um auf einen End-Host zuzugreifen, zu einer zweiten Zugriffsmodalität zumindest zum Teil auf der Basis davon, dass die Richtlinie verletzt wurde, wobei die erste Zugriffsmodalität und die zweite Zugriffsmodalität unterschiedliche Verfahren zum Zugriff auf den End-Host definieren, wobei die Richtlinie einen Zeitraum zum Verwenden der zweiten Zugriffsmodalität definiert, und wobei das Ändern (410) der ersten Zugriffsmodalität zu der zweiten Zugriffsmodalität beinhaltet:
Nutzen der zweiten Zugriffsmodalität für den Zeitraum und
Ändern zu der ersten Zugriffsmodalität zumindest zum Teil auf der Basis eines Verstreichens des Zeitraums.

2. NOC nach Anspruch 1, wobei das Definieren (406) der Richtlinie ein Aktualisieren einer Basisrichtlinie zumindest zum Teil auf der Basis des ersten Datensatzes und des zweiten Datensatzes beinhaltet, wobei die Basisrichtlinie eine vorkonfigurierte Richtlinie ist und/oder wobei das Definieren der Richtlinie beinhaltet:
Bestimmen, ob eine Anwendung, die von dem End-Host ausgeführt wird, auf einer Whitelist steht; und
zumindest zum Teil auf der Basis davon, dass die Anwendung, die von dem End-Host ausgeführt wird, auf der Whitelist steht, Definieren der Richtlinie, um einen Zugriff auf die zweite Zugriffsmodalität zu ermöglichen, wobei die zweite Zugriffsmodalität einen anderen Sicherheitsrisikograd im Verhältnis zu der ersten Zugriffsmodalität aufweist.

3. NOC nach einem der Ansprüche 1 bis 2, wobei die Arbeitsschritte weiterhin ein Kommunizieren der Richtlinie an eine zweite Netzwerkvorrichtung umfassen, wobei die zweite Netzwerkvorrichtung dazu konfiguriert ist, die Richtlinie auszuführen.

4. NOC nach einem der Ansprüche 1 bis 3, wobei die Sicherheitsleistungsmetrik, die von dem Sicherheitsdienst bereitgestellt wird, eine Metrik beinhaltet, die von einem Domänennamensystem-Schicht-Sicherheitsdienst (DNS-Schicht-Sicherheitsdienst), einem Secure-Web-Gateway-Dienst (SWG-Dienst), einem Firewall-Dienst, einem Cloud-Access-Security-Broker-Dienst (CASB-Dienst), einem interaktiven Threat-Intelligence-Dienst und Kombinationen davon bereitgestellt wird, und
wobei das Bestimmen (408), ob die Richtlinie verletzt wurde, ein Bestimmen, ob die Sicherheitsleistungsmetrik einen Schwellenwert verletzt, beinhaltet.

5. NOC nach einem der Ansprüche 1 bis 4, wobei die Netzwerkleistungsmetrik, die mit der Netzwerkvorrichtung assoziiert ist, eine Datenübertragungsgeschwindigkeit, eine Kommunikationslatenz oder eine Sitzungsdauer beinhaltet, und
wobei das Bestimmen (408), ob die Richtlinie verletzt wurde, ein Bestimmen, ob die Netzwerkleistungsmetrik einen Schwellenwert verletzt, beinhaltet.

6. Verfahren (400), umfassend:
Beziehen (402) eines ersten Datensatzes, der eine Sicherheitsleistungsmetrik definiert, die von einem Sicherheitsdienst bereitgestellt wird, von einer Secure-Access-Service-Edge-Vorrichtung (SASE-Vorrichtung), die den Sicherheitsdienst ausführt;
Beziehen (404) eines zweiten Datensatzes, der eine Netzwerkleistungsmetrik definiert, die mit einer Netzwerkvorrichtung assoziiert ist, von der SASE;
Definieren (406) einer Richtlinie zumindest zum Teil auf der Basis des ersten Datensatzes und des zweiten Datensatzes;
Bestimmen (408), ob die Richtlinie verletzt wurde; und
Ändern (410) einer ersten Zugriffsmodalität, die für die Netzwerkvorrichtung bereitgestellt wird, um auf einen End-Host zuzugreifen, zu einer zweiten Zugriffsmodalität zumindest zum Teil auf der Basis davon, dass die Richtlinie verletzt wurde, wobei die erste Zugriffsmodalität und die zweite Zugriffsmodalität unterschiedliche Verfahren zum Zugriff auf den End-Host definieren, wobei die Richtlinie einen Zeitraum zum Verwenden der zweiten Zugriffsmodalität definiert, und wobei das Ändern (410) der ersten Zugriffsmodalität zu der zweiten Zugriffsmodalität beinhaltet:
Nutzen der zweiten Zugriffsmodalität für den Zeitraum und
Ändern zu der ersten Zugriffsmodalität zumindest zum Teil auf der Basis eines Verstreichens des Zeitraums.

7. Verfahren (400) nach Anspruch 6, wobei das Definieren (406) der Richtlinie ein Aktualisieren einer existierenden Richtlinie zumindest zum Teil auf der Basis des ersten Datensatzes und des zweiten Datensatzes beinhaltet.

8. Verfahren (400) nach Anspruch 6 oder 7, wobei das Definieren (406) der Richtlinie beinhaltet:
Bestimmen, ob eine Anwendung, die von dem End-Host ausgeführt wird, auf einer Whitelist steht; und
zumindest zum Teil auf der Basis davon, dass die Anwendung, die von dem End-Host ausgeführt wird, auf der Whitelist steht, Definieren der Richtlinie, um einen Zugriff auf die zweite Zugriffsmodalität zu ermöglichen, wobei die zweite Zugriffsmodalität einen anderen Sicherheitsrisikograd im Verhältnis zu der ersten Zugriffsmodalität aufweist.

9. Verfahren (400) nach einem der Ansprüche 6 bis 8, weiterhin umfassend ein Kommunizieren der Richtlinie an eine zweite Netzwerkvorrichtung, wobei die zweite Netzwerkvorrichtung dazu konfiguriert ist, die Richtlinie auszuführen.

10. Verfahren (400) nach einem der Ansprüche 6 bis 9, wobei die Sicherheitsleistungsmetrik, die von dem Sicherheitsdienst bereitgestellt wird, eine Metrik beinhaltet, die von einem Domänennamensystem-Schicht-Sicherheitsdienst (DNS-Schicht-Sicherheitsdienst), einem Secure-Web-Gateway-Dienst (SWG-Dienst), einem Firewall-Dienst, einem Cloud-Access-Security-Broker-Dienst (CASB-Dienst), einem interaktiven Threat-Intelligence-Dienst und Kombinationen davon bereitgestellt wird, und
wobei das Bestimmen (408), ob die Richtlinie verletzt wurde, ein Bestimmen, ob die Sicherheitsleistungsmetrik einen Schwellenwert verletzt, beinhaltet.

11. Verfahren (400) nach einem der Ansprüche 6 bis 10, wobei die Netzwerkleistungsmetrik, die mit der Netzwerkvorrichtung assoziiert ist, eine Datenübertragungsgeschwindigkeit, eine Kommunikationslatenz oder eine Sitzungsdauer beinhaltet, und
wobei das Bestimmen (408), ob die Richtlinie verletzt wurde, ein Bestimmen, ob die Netzwerkleistungsmetrik einen Schwellenwert verletzt, beinhaltet.

12. Vorrichtung, umfassend:
Mittel zum Beziehen (402) eines ersten Datensatzes, der eine Sicherheitsleistungsmetrik definiert, die von einem Sicherheitsdienst bereitgestellt wird, von einer Secure-Access-Service-Edge-Vorrichtung (SASE-Vorrichtung), die den Sicherheitsdienst ausführt;
Mittel zum Beziehen (404) eines zweiten Datensatzes, der eine Netzwerkleistungsmetrik definiert, die mit einer Netzwerkvorrichtung assoziiert ist, von der SASE;
Mittel zum Definieren (406) einer Richtlinie zumindest zum Teil auf der Basis des ersten Datensatzes und des zweiten Datensatzes;
Mittel zum Bestimmen (408), ob die Richtlinie verletzt wurde; und
Mittel zum Ändern (410) einer ersten Zugriffsmodalität, die für die Netzwerkvorrichtung bereitgestellt wird, um auf einen End-Host zuzugreifen, zu einer zweiten Zugriffsmodalität zumindest zum Teil auf der Basis davon, dass die Richtlinie verletzt wurde, wobei die erste Zugriffsmodalität und die zweite Zugriffsmodalität unterschiedliche Verfahren zum Zugriff auf den End-Host definieren,
wobei die Richtlinie einen Zeitraum zum Verwenden der zweiten Zugriffsmodalität definiert, und
wobei das Ändern (410) der ersten Zugriffsmodalität zu der zweiten Zugriffsmodalität beinhaltet:
Nutzen der zweiten Zugriffsmodalität für den Zeitraum und
Ändern zu der ersten Zugriffsmodalität zumindest zum Teil auf der Basis eines Verstreichens des Zeitraums;
optional weiterhin umfassend Mittel zum Implementieren des Verfahrens (400) nach einem der Ansprüche 7 bis 11.

13. Computerprogramm, Computerprogrammprodukt oder computerlesbares Medium, das Anweisungen umfasst, die bei Ausführung durch einen Computer bewirken, dass der Computer die Schritte des Verfahrens (400) nach einem der Ansprüche 6 bis 11 durchführt.

## Revendications

1. Contrôleur d'optimisation de réseau (NOC) comprenant:
un ou plusieurs processeurs; et
un ou plusieurs supports non transitoires lisibles par ordinateur stockant des instructions qui, lorsqu'elles sont exécutées par ces un ou plusieurs processeurs, amènent ces un ou plusieurs processeurs à effectuer des opérations comprenant:
le fait d'obtenir (402), à partir d'un dispositif de la périphérie d'accès sécurisé (SASE) exécutant un service de sécurité, un premier ensemble de données définissant une métrique de performance de sécurité fournie par le service de sécurité;
le fait d'obtenir (404), à partir de la SASE, un deuxième ensemble de données définissant une métrique de performance de réseau associée à un dispositif de réseau;
le fait de définir (406) une politique basée au moins en partie sur le premier ensemble de données et le deuxième ensemble de données;
le fait de déterminer (408) si la politique a été enfreinte; et
le fait d'effectuer le changement (410) depuis une première modalité d'accès fournie pour que le dispositif de réseau accède à un hôte terminal à une deuxième modalité d'accès basée au moins en partie sur la politique qui est enfreinte, la première modalité d'accès et la deuxième modalité d'accès définissant différentes méthodes d'accès à l'hôte terminal, dans lequel la politique définit un intervalle de temps pour utiliser la deuxième modalité d'accès, et dans lequel le changement (410) depuis la première modalité d'accès à la deuxième modalité d'accès inclut:
le fait d'utiliser la deuxième modalité d'accès pendant l'intervalle de temps; et
le fait d'effectuer le changement à la première modalité d'accès basée au moins en partie sur une expiration de l'intervalle de temps.

2. NOC de la revendication 1, dans lequel la définition (406) de la politique inclut le fait de mettre à jour une politique de référence basée au moins en partie sur le premier ensemble de données et le deuxième ensemble de données, la politique de référence étant une politique préconfigurée et/ou dans lequel la définition de la politique inclut:
le fait de déterminer si une application exécutée par l'hôte terminal se trouve sur une liste blanche; et
sur la base, au moins en partie, du fait que l'application en cours d'exécution par l'hôte terminal se trouve sur la liste blanche, le fait de définir la politique pour permettre l'accès à la deuxième modalité d'accès, la deuxième modalité d'accès ayant un différent niveau de risque de sécurité par rapport à la première modalité d'accès.

3. NOC de n'importe lesquelles des revendications 1 à 2, les opérations comprenant en outre le fait de communiquer la politique à un deuxième dispositif de réseau, le deuxième dispositif de réseau étant configuré pour exécuter la politique.

4. NOC de n'importe lesquelles des revendications 1 à 3, dans lequel la métrique de performance de sécurité fournie par le service de sécurité inclut une métrique fournie par un service de sécurité de la couche Système de noms de domaine (DNS), un service de passerelle web sécurisée (SWG), un service de pare-feu, un service de courtier en sécurité d'accès au cloud (CASB), un service interactif de renseignements sur les menaces, et des combinaisons de ceux-ci, et
dans lequel la détermination (408) pour savoir si la politique a été enfreinte inclut la détermination pour savoir si la métrique de performance de sécurité enfreint un seuil.

5. NOC de n'importe lesquelles des revendications 1 à 4, dans lequel la métrique de performance de réseau associée au dispositif de réseau inclut une vitesse de transfert de données, une latence de communication, ou une durée de session, et
dans lequel la détermination (408) pour savoir si la politique a été enfreinte inclut la détermination pour savoir si la métrique de performance de réseau enfreint un seuil.

6. Procédé (400) comprenant:
le fait d'obtenir (402), à partir d'un dispositif de la périphérie d'accès sécurisé (SASE) exécutant un service de sécurité, un premier ensemble de données définissant une métrique de performance de sécurité fournie par le service de sécurité;
le fait d'obtenir (404), à partir de la SASE, un deuxième ensemble de données définissant une métrique de performance de réseau associée à un dispositif de réseau;
le fait de définir (406) une politique basée au moins en partie sur le premier ensemble de données et le deuxième ensemble de données;
le fait de déterminer (408) si la politique a été enfreinte; et
le fait d'effectuer le changement (410) depuis une première modalité d'accès fournie pour que le dispositif de réseau accède à un hôte terminal à une deuxième modalité d'accès basée au moins en partie sur la politique qui est enfreinte, la première modalité d'accès et la deuxième modalité d'accès définissant différentes méthodes d'accès à l'hôte terminal, dans lequel la politique définit un intervalle de temps pour utiliser la deuxième modalité d'accès, et dans lequel le changement (410) depuis la première modalité d'accès à la deuxième modalité d'accès inclut:
le fait d'utiliser la deuxième modalité d'accès pendant l'intervalle de temps; et
le fait d'effectuer le changement à la première modalité d'accès basée au moins en partie sur une expiration de l'intervalle de temps.

7. Procédé (400) de la revendication 6, dans lequel la définition (406) de la politique inclut le fait de mettre à jour une politique existante basée au moins en partie sur le premier ensemble de données et le deuxième ensemble de données.

8. Procédé (400) de la revendication 6 ou 7, dans lequel la définition (406) de la politique inclut:
le fait de déterminer si une application exécutée par l'hôte terminal se trouve sur une liste blanche; et
sur la base, au moins en partie, du fait que l'application en cours d'exécution par l'hôte terminal se trouve sur la liste blanche, le fait de définir la politique pour permettre l'accès à la deuxième modalité d'accès, la deuxième modalité d'accès ayant un différent niveau de risque de sécurité par rapport à la première modalité d'accès.

9. Procédé (400) de n'importe lesquelles des revendications 6 à 8, comprenant en outre le fait de communiquer la politique à un deuxième dispositif de réseau, le deuxième dispositif de réseau étant configuré pour exécuter la politique.

10. Procédé (400) de n'importe lesquelles des revendications 6 à 9, dans lequel la métrique de performance de sécurité fournie par le service de sécurité inclut une métrique fournie par un service de sécurité de la couche Système de noms de domaine (DNS), un service de passerelle web sécurisée (SWG), un service de pare-feu, un service de courtier en sécurité d'accès au cloud (CASB), un service interactif de renseignements sur les menaces, et des combinaisons de ceux-ci, et
dans lequel la détermination (408) pour savoir si la politique a été enfreinte inclut la détermination pour savoir si la métrique de performance de sécurité enfreint un seuil.

11. Procédé (400) de n'importe lesquelles des revendications 6 à 10, dans lequel la métrique de performance de réseau associée au dispositif de réseau inclut une vitesse de transfert de données, une latence de communication, ou une durée de session, et
dans lequel la détermination (408) pour savoir si la politique a été enfreinte inclut la détermination pour savoir si la métrique de performance de réseau enfreint un seuil.

12. Appareil comprenant:
des moyens pour obtenir (402), à partir d'un dispositif de la périphérie d'accès sécurisé (SASE) exécutant un service de sécurité, un premier ensemble de données définissant une métrique de performance de sécurité fournie par le service de sécurité;
des moyens pour obtenir (404), à partir de la SASE, un deuxième ensemble de données définissant une métrique de performance de réseau associée à un dispositif de réseau;
des moyens pour définir (406) une politique basée au moins en partie sur le premier ensemble de données et le deuxième ensemble de données;
des moyens pour déterminer (408) si la politique a été enfreinte; et
des moyens pour effectuer le changement (410) depuis une première modalité d'accès fournie pour que le dispositif de réseau accède à un hôte terminal à une deuxième modalité d'accès basée au moins en partie sur la politique qui est enfreinte, la première modalité d'accès et la deuxième modalité d'accès définissant différentes méthodes d'accès à l'hôte terminal,
dans lequel la politique définit un intervalle de temps pour utiliser la deuxième modalité d'accès, et
dans lequel le changement (410) depuis la première modalité d'accès à la deuxième modalité d'accès inclut:
le fait d'utiliser la deuxième modalité d'accès pendant l'intervalle de temps; et
le fait d'effectuer le changement à la première modalité d'accès basée au moins en partie sur une expiration de l'intervalle de temps;
facultativement comprenant en outre des moyens pour mettre en œuvre le procédé (400) selon n'importe lesquelles des revendications 7 à 11.

13. Programme informatique, produit de programme informatique ou support lisible par ordinateur comprenant des instructions qui, lorsqu'elles sont exécutées par un ordinateur, amènent l'ordinateur à réaliser les étapes du procédé (400) de n'importe lesquelles des revendications 6 à 11.
